(19) Europäisches Patentamt

European Patent Office

Office européen des brevets

(11) **EP 1 257 096 A2**

(12) **EUROPEAN PATENT APPLICATION**

(43) Date of publication:
**13.11.2002  Bulletin 2002/46**

(51) Int Cl.⁷: **H04L 12/56**

(21) Application number: **01126856.2**

(22) Date of filing: **12.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Masseroni, Carlo**<br>  **20017 Rho (IT)**<br>• **Parolari, Sergio**<br>  **20133 Milano (IT)** |
| (30) Priority:  **22.12.2000  IT  MI002800** | (74) Representative: **Giustini, Delio**<br>**Siemens Information and** |
| (71) Applicant: **Siemens Information and Communication Networks S.p.A.**<br>**20126 Milano (IT)** | **Communication Networks S.p.A.**<br>**Palazzo Gorky**<br>**Via Monfalcone, 1**<br>**20092 Cinisello Balsamo (IT)** |

(54) **Procedure for the scheduling of packet data transmission permits on radio channels shared by mobile stations in GSM-GPRS systems**

(57)    It is described a procedure for the scheduling of transmission permits of radio blocks of the RLC/MAC protocol specified for the new GPRS service of packet data transmission in GSM systems. The procedure foresees the establishment of as many priority queues of transmission permits as are the GPRS time-slots, to be used for the scheduling of control and signalling blocks, and of a same number of non-priority queues of permits for the scheduling of RLC blocks of data queued in the buffers of TBF. At each scheduling step, the priority queues of permits are filled starting from the requests sent on FIFO basis by the TBF MANAGER. When a request for a TBF$i$ connection is received, an identifier TFI$i$, and a possible RRBP value are written in the permit queue resulting more unloaded among those assigned to the mobile, and so on, up to exhausting the requests. In the same scheduling step, non-priority queues are filled randomly selecting a TBF$i$ queue, and a time-slot $j$ among those allocated to the TBF$i$ connection for which the more unloaded permit queue is allocated, and entering the maximum possible number of TFI$i$ identifiers, in the form of permits, in subsequent free positions of the selected queue. The granting of permits to different TBF$i$ queues being repeated in the current step, where possible (Figure 25a).

FIG.25a

EP 1 257 096 A2

**Description**

**Field of the invention**

The present invention relates to the field of mobile telephone networks and more in particular to a scheduling procedure of packet data transmission permits on radio channels shared by the mobiles in GSM-GPRS systems.

**Background art**

Mobile telephone systems PLMN (Public Land Mobile Network) are evolving toward a so-called third generation, following the thrust of an ever increasing request of services in the field of data transmission, such as for instance for the connections to Internet. However, the coming into service of the third generation UMTS systems (Universal Mobile Telephony System) will require some more time before the final leaving of the prototypization phase and reaching of an efficient territorial coverage. At the same time, there is room for a re-powering of the data transmission service through the existing second-generation mobile systems, which, being based on the circuit switching, avail of the radio resources mainly voice rather than data transmission oriented. The latter results penalized in the maximum bit-rate that can be reached. These requirements are particularly urged in GSM environment (Global System for Mobile communications), also because not all the current operators of the GSM service could take advantage of a UMTS licence. In the case of a re-powering of the data service, however, those who are excluded could rely on users capable of appreciating the improvements introduced in the GSM. The need for a re-powering of the data transmission service in the GSM system was however already foreseen in ETSI environment (European Telecommunications Standards Institute). This led to the definition and publication of new technical specifications concerning a packet switching service on the existing GSM networks. The service is known under the GPRS acronym (General Packet Radio Service); hereinafter the term GPRS shall also be used to define the system or the network where the service is performed. The packet switching routing is "connectionless" due to its nature, that is, it does not require the constant use of physical resources for the whole active session time; consequently, the available resources can be shared among more users, who use then alternately, only when these are actually needed. The advantage taken by the GPRS system in data transmission compared to the traditional GSM system is double: for the operator, it is that to be able to serve more users at equal resources available, for users, it is to pay for the actual time of use of the resources only, and therefore not for dead times too.

The present invention grafts on to the GSM/GPRS system; for this reason its description requires a presentation of the GPRS service, mainly concerning the network architecture and interfaces, the signal format, and the structure of the operation protocols. The aspects having higher impact on the description of the embodiment of the invention shall be emphasized. Later on, we shall consider some documents of the known art being in relation with the GPRS system. These papers, together with the presentation of the GPRS system, will help to formulate the technical problem that the subject invention intends to solve. The presentation of the GPRS system avails of the numerous technical specifications published up to now on the matter, and in particular of the following GSM documents in phase 2+:

- Service description; Stage 1 (**GSM 02.60** version 7.2.0, Release 1998);
- Service description; Stage 2 (**GSM 03.60** version 7.1.0, Release 1998);
- Overall description of the GPRS radio interface; Stage 2 (**GSM 03.64** version 8.3.0, Release 1999);
- Mobile Station (MS) - Base Station System (BSS) interface; Radio Link Control/Medium Access Control (RLC/MAC) protocol (**GSM 04.60** version 8.0.0, Release 1999);
- Mobile Station - Serving GPRS Support Node (MS-SGSN); Logical Link Control (LLC) layer specification (**GSM 04.64** version 8.0.0 Release 1999);

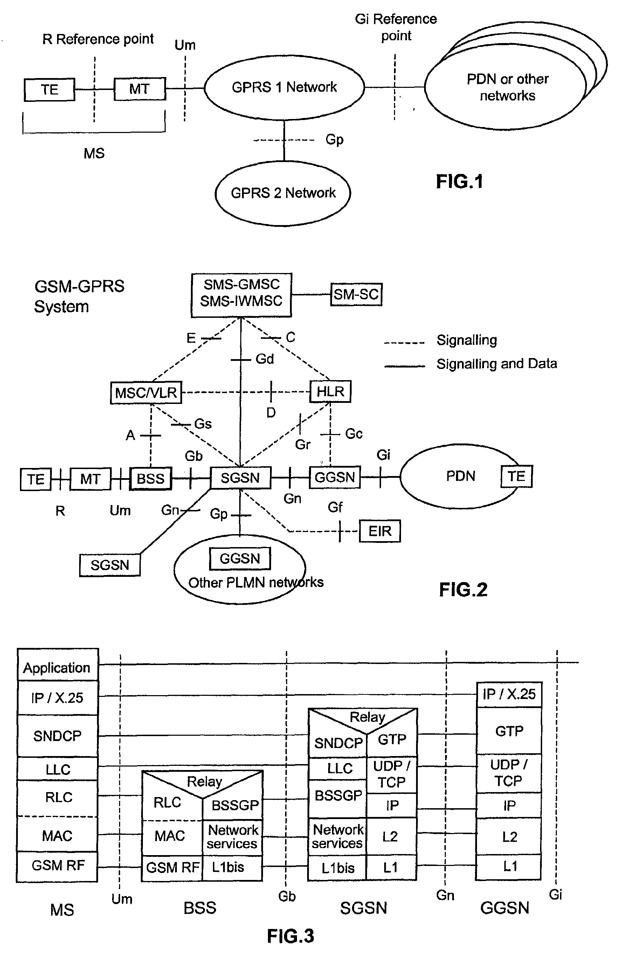

**Figure 1** of the present application (corresponding to figure 1 of the **GSM 03.60** standard) shows the functional architecture of an integrated telephone network that highlights the access interfaces to the GPRS service at the so-called Reference Points. In the figure it can be noticed a mobile station MS (Mobile Station) connected to an access port of a GPRS 1 network through a Um radio interface. The GPRS 1 network is in turn connected to a second GPRS 2 network through a Gp interface, and to a public network PDN (Public Data Network) through a connection indicated by a Reference point Gi. The mobile station MS includes a first functional block TE (Terminal Equipment) connected to a second functional block MT (Mobile Terminated) through a connection indicated by a Reference point R, which typically supports a standard serial interface. The MT block is connected to the Um interface supplying packet data services on radio channels.

**Figure 2** of the present application (corresponding to Figure 2 of the same **GSM 03.60** standard) shows the functional architecture of a GSM network supporting the GPRS service. Compared to the previous Figure 1, the GPRS 1 network is detailed in its functional blocks, out of which the following: SGSN (Service GPRS Support Node), GGSN (Gateway GSN), and EIR (Equipment Identity Register) are new, compared to the traditional GSM system, while the remaining blocks: BSS (Base Station System), MSCNLR (Message Switching Centre / Visitor Location Register), HLR (Home Location Register), SMS-GMSC (Short Message Service - Gateway MSC) and SMS-IWMSC (SMS - InterWorking MSC), and finally SM-SC (Short Message - Service Centre) are upgrades for the GPRS service of the homonym blocks of the traditional GSM system. Compared to Figure 1, the following new interfaces are foreseen: Gb, Gn, Gp, Gf, Gs, Gr, Gd, D, E, C, whose connectivity between the relevant blocks are directly visible in the figure. In particular, the Gn interface connects two GSN nodes in the same PLMN system, while the Gp interface connects two GSN nodes belonging to different PLMN systems.

As it can be noticed in Figure 2, some differences between the GPRS system and the Traditional GSM can be noticed just in the network structure, mainly due to the two new SGSN and GGSN nodes and relevant interfaces. The new SGSN node is at the same hierarchical level as an MSC centre, it keeps records of the individual locations of the mobiles and performs the safety and access control functions. To this purpose, the HLR record is enriched with the information of the GPRS user. The new GGSN node performs the interworking function with packet switching external networks, and is connected with other SGSN nodes through a GPRS dorsal network based on the IP protocol.

In the operation, an MS mobile that intends to have access to GPRS services, shall first inform the network of his presence making a GPRS attack operation. This operation establishes a logic link between the MS mobile and the SGSN node, and makes the MS mobile available for the SMS service via GPRS, for the paging through the SGSN node, and the notification of entering GPRS data. To be able to send and receive GPRS data the MS mobile shall enable the address of packet data it wants to use; this operation makes it known to the corresponding GGSN node and interworking with the external data networks can begin. Packet data generated by a user are transferred in a transparent way between the MS mobile and the external data networks, with a method known as encapsulation and tunnelling. The method consists in the fact that packet data are integrated with specific GPRS protocol information and then transferred between the MS mobile and the GGSN node. This transparent transfer method relieves the GPRS system PLMN of the need of interpreting external data protocols and facilitates the introduction of future additional interworking protocols. Data generated by a user can be compressed and protected with re-transmission protocols to obtain higher effectiveness and reliability.

Further technical characteristics of the GPRS system are listed under point 4 (Main Concepts) of the same **GSM 03.60** standard under consideration, and are here re-proposed to better frame the invention that shall be described. In particular, under point 4, it is said that the GPRS system employs a packet-mode technique to effectively transfer data and signalling either at high or at low speed, through the optimization of the use of radio and network resources. A severe separation is kept between the radio sub-system and the network sub-system, enabling the re-utilization of the network sub-system with other radio access technologies. The GPRS system does not impose changes to an already installed basic MSC.

New GPRS radio channels have been defined and the allocation of these channels is flexible, for instance: 1 to 8 time-slots of the radio interface can be allocated within the TDMA frame (Time Division Multiple Access), time-slots are shared by active users and are separately allocated up and downlink. The resources of the radio interface can be dynamically shared between voice and data services, according to the service load and the operator preference. Four coding schemes of the modulated radio signal GMSK (Gaussian Minimum Shift Keying) are foreseen to enable bit-rates included between 9 and more than 150 kbit/s per user (the highest bit-rate if of course referred to the exclusive use of the eighth time-slots available on the TDMA frame, and in complete absence of redundancy). An enriched version of the GPRS service is also specified, called Enhanced GPRS (EGPRS), in which the GMSK traditional modulation is replaced by a modulation up to 8-PSK (Phase Shift Keying). In this case the modulation and coding schemes are increased to nine and the maximum bit-rate per user consequently increases up to approximately 570 kbit/s over the 8 time-slots.

Applications based on data protocols of the standard type are supported, and the interworking is defined with IP (Internet Protocol) and X.25 networks. Specific point-to- point and point -to-multipoint services are supported. The transfer of the SMS service (Short Message Service) on GPRS radio channels is permitted.

The GPRS system is designed to support a data transfer ranging from the intermittent and burst type, up to the occasional transmission of a great volume of data. Different profiles of the service quality are foreseen. The taxation should be based on the amount of data transferred.

The GPRS system supports three operating modes of the MS mobiles: a mobile in class A mode simultaneously operates with GPRS and GSM services. A class B mobile simultaneously observes the control channels for GPRS and GSM services, but can operate only on one service set at a time. Finally, a class C mobile, operates with GPRS services only.

As far as the SMS service is concerned, some functions of the MSC centre are subjected to an upgrade to support the transmission of SMS messages via the SGSN node. Optionally, the functional block MSC/VLR can be increased for a more efficient co-ordination of GPRS and non-GPRS services and functions: for example, the paging for circuit switching calls through the SGSN node, and the combined updating of GPRS and non-GPRS locations.

The function concerning safety is identical to the one existing for the pure GSM. The SGSN node performs an authentication and ciphering algorithm optimized for packet data transmission. A GPRS ME (Mobile Equipment) mobile can have access to GPRS services through SIMs (Subscriber Identity Module) informed, or not, that this kind of function exists.

The cell-selection can be independently made by the MS mobile, or the base station tells the mobile to select a given cell. The mobile informs the network when it re-selects another cell or group of cells forming a routing area (routing area).

The complex functions listed above require, for their performance, protocols capable of managing at the Um, Gb, and Gn interfaces the procedures for the transmission and for the control of the information transfer (i.e. flow control, error detection, error correction or re-transmission, etc.).

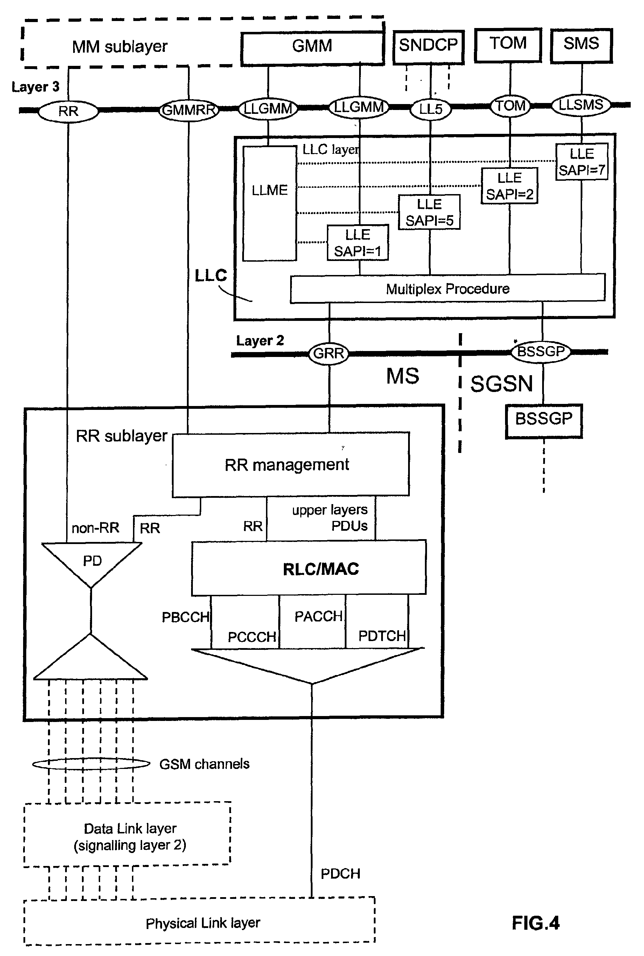

**Figure 3** of the present application (corresponding to figure 4 of the mentioned **GSM 03.60** standard) shows the "Transmission Plane" including the protocol stacks foreseen at the main interfaces of Figure 2. The "Transmission Plane" is a superimposed layer structure (layers) that follows the ISO model (International Organization for Standardization) for interconnections in open systems OSI (Open System Interconnection). According to this model an open system can be described with a set of sub-systems placed within a vertical sequence (stack). A sub-system N, that consists of one or more layer entities N, interacts only with the sub-systems placed above and beneath. A layer entity N performs functions within the layer N it belongs to. For the communication among N entities of equal layer (peer entities) a protocol called peer-to-peer is used. The information unit that is exchanged through a peer-to-peer protocol is called N-PDU (N-Protocol Data Unit), it includes the data and a control information N-PCI (N-Protocol Control Information). Entities of equal layer N communicate between them using the services supplied by the layer underneath. Likewise, the services of the layer N are fed to layer N+1 at an access point called N-SAP (N-Service Access Point). For the description of the interface between adjacent layers N and N+1, level N primitives are introduced. A level N primitive together with an associated data service unit N-SDU (N-Service Data Unit) are sent by the layer N to layer N+1, and vice versa, using to this purpose a level N service protocol. The primitives and the SDU units therefore enable the bi-directionality of the information flow along a stack.

The functions that shall be specified for the different layers of figure 3 require additional support and control functions, described in additional protocol stacks relating to "Signalling Planes" operating at the different interfaces of figure 2. Afterwards, when this does not engender confusion, the term layer is considered a synonym of protocol. N. B. The connections between homonym layers of figure 3 belonging to different protocol stacks, are of course of the logic type. The information transferred by a starting layer to a destination one is always conveyed by the physical channels used at the different interfaces: Gb, Abis, Um, present on the path made by packets to descend the starting protocol stack, suffering the transformations imposed by layers crossed, to cross the physical layer, and then climb the arrival stack.

**Figure 3** shows in order the functional blocks MS, BSS, SGSN, and GGSN; for each functional block it is shown the protocol stack used at one side of the block. As it can be noticed, each one of the BSS and SGSN blocks includes two different interfaces and therefore includes two different protocol stacks, in this case, at the top of each pair of stacks, a Relay function is necessary, enabling to use the immediately higher layer of the protocol by interfaces placed at the two sides of each block. Following is the list of the protocols that can be seen in Figure 3, with a brief comment of those more involved in the invention that shall be described:

- GTP (GPRS Tunnelling Protocol): specified in GSM 09.60.
- TCP (Transmission Control Protocol): defined in RFC (Radio Frequency Channel) 793.
- UDP (User Datagram Protocol): defined in RFC 768.
- IP (Internet Protocol): it is the well-known protocol of PDP type (Packet Data Protocol) employed in the GPRS dorsal network to route data and signalling.
- SNDCP (Subnetwork Dependent Convergence Protocol): this transmission function maps the characteristics at network level within the characteristics of the underneath network. The SNDCP protocol is described from the functional point of view in GSM 03.60 and specified in GSM 04.65.
- LLC (Logical Link Control): this layer gives a ciphered logic link highly reliable to transport information between level 3 entities in the MS mobile and in the SGSN node. The LLC protocol is specified in GSM 04.64 and shall be better detailed with reference to Figure 4.
- Relay: this function, in the BSS station, exchanges the protocol units LLC PDU (LLC Protocol Data Unit) between the interfaces Um and Gb.
- RLC/MAC: the RLC (Radio Link Control) function gives a reliable radio link and maps the LLC frames within the physical channel GSM. The MAC (Medium Access Control) function controls the access signalling procedures (request and grant) for the radio channel. The RLC/MAC protocol is defined in GSM 04.60 and shall be better detailed with reference to figure 4.

- GSM RF: relates to the radio channel at the Um interface, defined in the set of GSM 05 specifications.
- BSSGP (Base Station System GPRS Protocol): this layer transports information relevant to the routing and quality of the service exchanged between the BSS and SGSN sub-systems. The BSSGP protocol does not perform the error correction. It is specified in GSM 08.18.

Concerning the "Signalling Plane" MS-SGSN that better involves the present invention, reference can be made to Figure 3 in which in MS and SGSN blocks above the LLC layer, a layer called GMM/SM (GPRS Mobility Management and Session Management) is indicated and shall be described later on.

**Figure 4** of the present application corresponds to Figure 1 of the GSM 04.60 standard in which the LLC layer, generically indicated with a block in the figure of the standard, on the contrary is here represented with the detail resulting from Figure2 of GSM 04.64 standard. **Figure 4** of the present application gives a representation of the architecture of protocols of the Transmission Plane of figure 3, particularly oriented to the communication between the MS mobiles and the SGSN node, which of course crosses the BSS sub-system. It must be pointed out that the connections between the different blocks shown are of the logic type that is functional, despite the circuit impression engendered by the context in the figure. Compared to the representation of Figure 3, the layer 3 results enriched with the following additional protocols: GMM, SMS, and TOM (Tunnelling Of Messages), of which:

- The GMM protocol (GPRS Mobility Management) employs the services of the LLC layer to transfer messages between the MS mobile and the SGSN node. The interaction between GMM and LLC layers is defined in terms of service and primitives, and is governed by procedures defined in GSM 04.08. The GMM protocol supports also the functions for the mobility govern, such as for instance the GPRS attack ones, GPRS detach, safety, updating of the routing area, updating of the location, enabling of the operating context of the PDP protocol for packet data, and the disabling of the above mentioned PDP context. The many functions of the GMM protocol are described in chapter 6 of the GSM 03.60 standard.
- The SNDCP protocol controls the transfer of the network protocol units N-PDU (Network-PDU) between an MS mobile and the SGSN node. The main functions of the SNDCP protocol are:

- Multiplexing of packet data protocols, for instance IP.
- Compression / decompression of the user data packets.
- Compression / decompression of the protocol control information.
- Segmentation of the network protocol units (N-PDU) within LLC (LL-PDU) protocol units and re-assembly of the LL-PDU protocol units within the N-PDU protocol units.

To carry out the above mentioned functions, the SNDCP protocol avails of a NSAPI (Network layer Service Access Point Identifier) identifier, identifying in the MS mobile the access point to a packet data protocol PDP, while in SGSN and GGSN nodes it identifies the context associated to an address of the above mentioned PDP protocol.

- The TOM protocol is used to exchange envelopes of the homonym protocol between an MS mobile and the SGSN node. TOM procedures are defined in Annex B of the GSM 04.64 standard.
- The SMS protocol employs the services of the LLC layer to transfer SM messages (Short Messages) between an MS mobile and the SGSN node. SMS procedures are defined in GSM 03.40.

With reference to **Figure 4**, the following level-3 blocks are shown: SNDCP, TOM, SMS, and a dotted MM sublayer block including the GMM block. The dotted MM sublayer is connected to two service access points RR and GMMRR (GMM to Radio Resource) supplied by a level-2 RR (Radio Resource) sublayer. The remaining GMM, SNDCP, TOM, and SMS blocks are in order connected to the following service access points offered by layer LLC: 2xLLGMM (LLC to GPRS Mobility Management); LLx (Logical Link x); TOM2,8; and LLSMS. All the SAP (Service Access Points) access points indicated above are placed on the line dividing the level-3 layer from LLC and RR layers underneath. The LLC layer is functionally represented by an LLC block that includes a LLME block (Logical Link Management Entity), connected to one of the two LLGMM access points and to as many LLE (Logical Link Entity) blocks as are the remaining service access points. LLE blocks include a same number of SAPI (Service Access Point Identifier) identifiers, consistently numbered with the relevant SAP points, which they are individually associated to. Each LLE block is connected to a relevant access point of a block called Multiplexer Procedure. The latter has two additional GRR (GPRS Radio Resources) and BSSGP access points bridging a line that delimits at bottom the Layer 2. The services supplied by the RLC/MAC sublayer concerning the MS mobile reach the GRR access point, while the BSSGP access point is reached by the services supplied by the homonym sublayer concerning the SGSN node.

The RR sublayer block includes the following blocks: RR Management, RLC/MAC (Radio Link Control / Medium Access Control), and PD (Protocol Discriminator). The RR Management block is connected to GMMRR and GRR access points, and also, to the PD block through a first way indicated with RR, and to block RLC/MAC through a second way also indicated with RR, and a third way denoted upper layers PDUs. The PD block is further connected to the RR access point, bridging Layer 3, through a way called non-RR. The PD block generates at output the whole variety of GSM channels, called GSM channels. The RLC/MAC block generates at output the following GPRS channels: PBCCH (Packet Broadcast Control Channel), PCCCH (Packet Common Control Channel), PACCH (Packet Associated Control Channel), and PDTCH (Packet Data Traffic Channel). The channels generated by the RLC/MAC block are conveyed to the output of the RR sublayer block in the physical channel PDCH (Packet Data Channel) reaching a dotted block Physical Link Layer representing the physical layer. The plurality of GSM channels cross a dotted block Data Link layer (signalling layer 2) and reach it too the Physical Link Layer block.

In the operation, the MM sublayer block performs the Mobility Management functions foreseen for the GSM system, operating in association with the GMM block that performs similar functions for the GPRS service. The interaction between the two systems, as for the allocation of the relevant radio resources, is controlled by the RR Management protocol. The diagram in Figure 4 shows the GPRS service in the GSM system, giving a frame of the global GSM-GPRS system. However, the present invention is located in the GPRS environment and, as we shall see, has impact mainly on the RLC/MAC block. Therefore, from the representation of Figure 4 it is necessary to deepen the functional description of this sole block. However, for a more detailed description, a brief outline of the RR Management block functionality shall be given together with a functional description of the LLC block, since the functionality of these blocks have obvious impact on that of the RLC/MAC block. It must be noticed how GRR and BSSGP access points bridging the division line of Layer 2, give the LLC layer the possibility to support the dialogue between the MS mobile and the SGSN node, with the additional support of the BSSGP protocol supporting the dialogue through the BSS subsystem (Figure 3).

The RR Management block performs the control procedures of radio resources for the GSM-GPRS system, as described in GSM 04.07. The operating modes of these procedures, referred to the GPRS service only for briefness, are essentially the following two: Packet idle mode, and Packet transfer mode, as described in GSM 04.08. In the idle mode the MS mobile listens to the paging sub-channel of the PBCCH channel to monitor the paging group which it belongs to, and possibly switch to dedicated mode. In the Packet transfer mode the MS mobile asks the network the allocation of the physical resources necessary for packet transfer, thus interacting with the functions of the RLC/MAC blocks that shall be described later on.

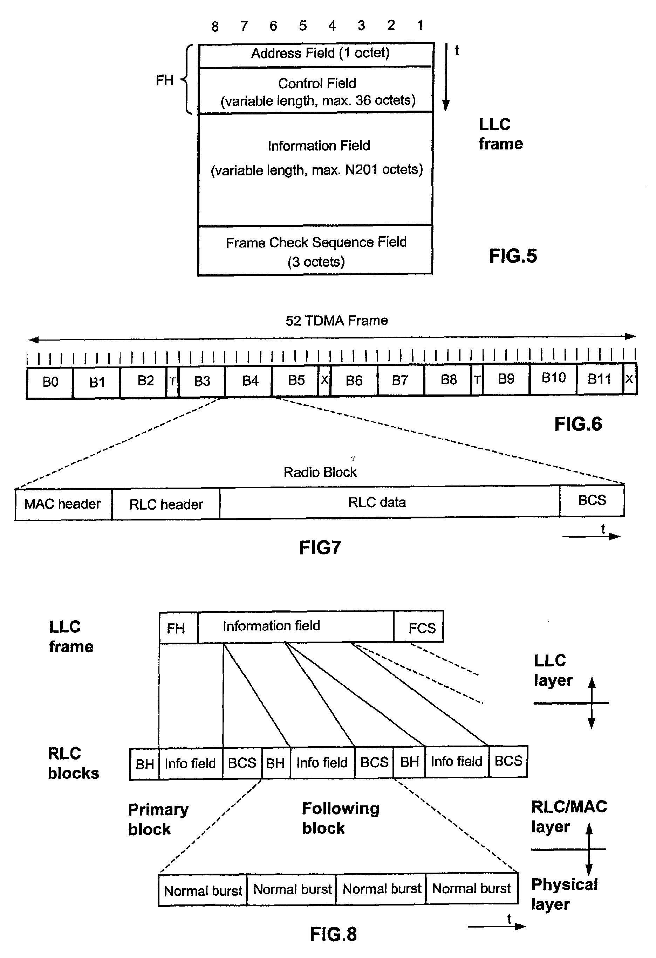

As far as the LLC block is concerned, inside the same, the LLE blocks represent stage equipment controlling a connection logic link to the service type addressed by the corresponding SAPI identifier. The LLME block is also a stage-equipment governing the resources having impact on individual logic connections at the LLC layer. Continuing in the operation description, it is first necessary to introduce a connection identified DLCI (Data Link Connection Identifier) used by the LLC layer for the routing (routeing) of packets to the network layer; it is also necessary to define the establishment of the LLC serial frame. The DLCI identifier consists of two identifiers, out of which, the first one is the NSAPI identifier, already described, and a second is a TLLI (Temporary Logical Link Identifier) temporary identifier, unambiguously identifying the link between a MS mobile and the SGSN node during an active connection. On the contrary, concerning the establishment of the LLC serial frame, it is represented in **Figure 5** of the present application (corresponding to Figure 3 of the mentioned GSM 04.64 standard). The LLC frame of Figure 5 timely proceeds from top to bottom and includes a FH header (Frame Header), followed by an "Information Field" of variable length, reserved to data that must be routed, followed in turn by a FCS (Frame Check Sequence) queue that contains the result of a checksum on the previous fields. The FH header includes an address field for the identification of the frame and a control field including an opportune SAPI identifier.

With the clarifications given, it is possible to describe the operation of the Multiplexer Procedure block. This block, in the frame transmission mode (that is, delivery of a LLC frame to RLC/MAC or BSSGP layers) generates and inserts the FCS field at the queue of the LLC frames, performs the ciphering function, and solves the dispute of the LLC layer among the different LLE blocks on the basis of SAPI identifiers. On the frame reception mode, the Multiplexer Procedure block performs the deciphering function of LLC frames received from the MAC protocol, opportunely assembling the packet information, and checking also the validity of the FCS field: if the frame passes the test, it is delivered to the appropriate LLE block on the basis of the DLCI identifier.

Concerning the control of the information flow, LLC procedures, and consequently the underlaying RLC/MAC procedures, are modelled on known labelled concepts as HDLC (High level Data Link Control), see ISO 4335. The HDLC control employs a cyclic numbering scheme to guarantee the integrity of the sequence of data transmitted. Independent numbering schemes are used for each logic link. The LLC procedures for data transfer are based on two operating methods, respectively: Acknowledged and Unacknowledged. In the Acknowledged mode two entities (peers) are involved, participating to a balanced data connection, where each entity undertakes the responsibility for the organization of its data flow and for the recovery procedures of errors associated to the transmissions it originates. Each entity operates both as data source and as termination, in a link thus resulting balanced, enabling the information to flow in both directions. This operating mode is known with the ABM acronym (Asynchronous Balanced Mode) and offers a reliable service with an ordered delivery of the packets. In the Unacknowledged mode, a logic entity is involved, which can start the transmissions towards a second entity (peer) without a logic connection between the two entities has been established before. In this case the LLC layer does not assure the ordered delivery of the packets. The errors in the frames received are detected and the wrong frames can be discarded or otherwise delivered by the LLC layer, which however does not actuate any procedure for error recovery.

It must be now examined the operation of the RLC/MAC block, after an outline of the Physical Link Layer, concerning which it is worth remembering that the design setting of the GPRS system has maintained as target the compatibility with the existing GSM standard, in order it can be easily integrated availing of the same physical channel at the Um interface. The resources necessary to the GPRS service foresee an additional number of logic channels supporting the transfer of radio blocks through the physical channel PDCH. GPRS logic channels have names and functional characteristics greatly faithfully following those of the channels of the Traditional GSM, though referred to packets. The transformation suffered by the packet information (data and signalling) in the passage from an LLC frame to the physical layer, and vice versa, is shown in **Figure 8.** This figure grounds on the teachings of **Figures 6 and 7.**

**Figure 6** (corresponding to Figure 2 of GSM 3.64) shows a multiframe of 52 GSM frames, divided into 12 radio blocks of four frames each, plus two T frames used for the synchronization and two X idle frames. The multiframe of Figure 6 is used to multiplex in time the GPRS and GSM logic channels. Different structures are foreseen for radio blocks, out of which one for the transfer of packet data is visible in Figure 7.

With reference to **Figure 7** (corresponding to Figure 4 of the GSM 3.64) we see that the GPRS radio block indicated includes the following fields:

- MAC 8 bit header, contains control fields, differing for uplink and downlink directions.
- RLC header of variable length, as above.
- RLC data, contains octets relating to one or more units of the LLC protocol.
- BCS (Block Check Sequence), used for error detection .

A block similar to the previous one, but with the sole MAC header, is foreseen for the transfer of control messages. For the GPRS service the detail of the different fields belonging to RLC uplink/downlink data blocks is indicated under point 10.2 of the GSM 4.60, while for RLC/MAC control blocks, the detail is indicated under point 10.3. Additional indications are given for the detail of RLC/MAC blocks relating to the EGPRS service.

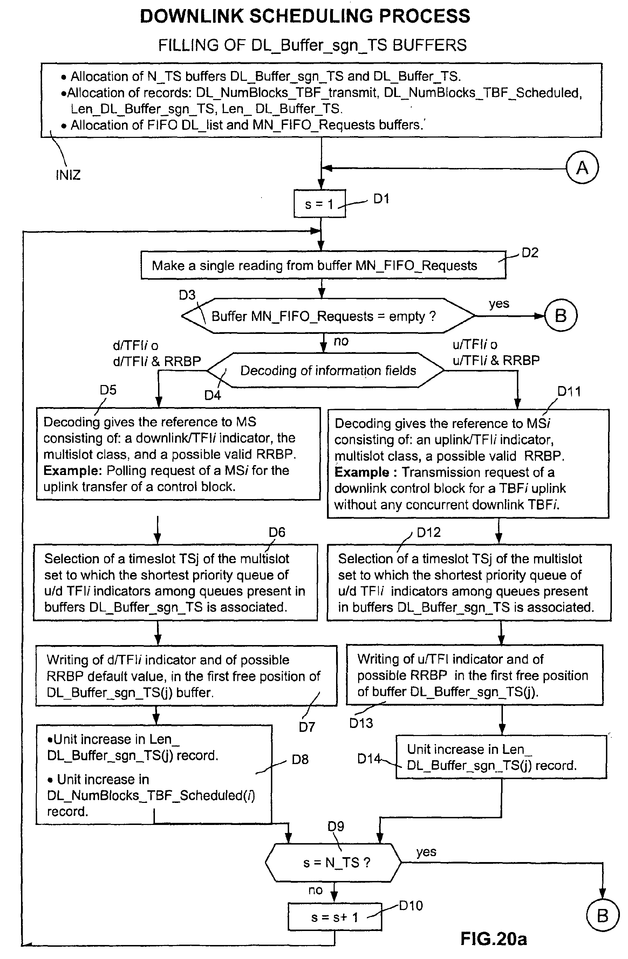

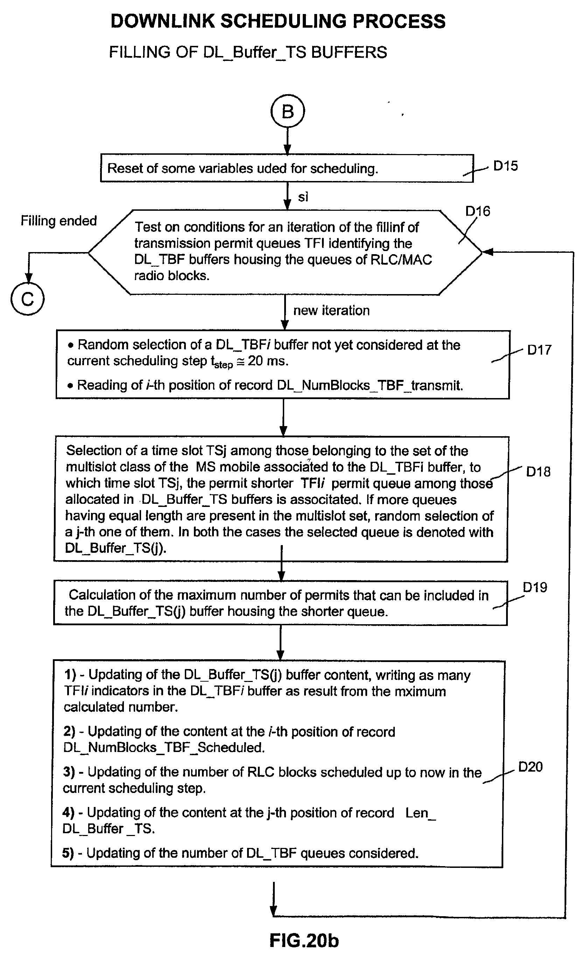

**Figure 8** (corresponding to Figure 20 of the GSM 3.64) shows the segmentation of the LLC layer frames within the radio blocks of the RLC/MAC layer. As it can be noticed, each radio block is transported by four consecutive Normal bursts of the GSM multiframe of Figure 7. The four Normal bursts have to be intended as interleaved on four consecutive TDMA 4,615 ms frames. The meaning of the different fields has already been described, except for the BH field (Block Header) that is a block header. In the figure we can notice that a Primary block that, contrarily to the subsequent Following blocks, includes the FH field of the LLC frame.

Returning to **Figure 4**, it is now described the operation of the Physical Link Layer block. This block operates above the GSM layer RF (Figure 3) and supplies the PDCH physical channel for the packet information transport through the GSM radio interface, thus enabling the communication between the MS mobiles and the network. An important service supplied by the above mentioned'block is to physically enable the sharing of the same PDCH physical channel (one frequency and one time-slot) by more mobiles. The Physical Link Layer block is responsible for:

- the channel coding to implement the so-called Forward Error Correction (FEC), enabling the detection and correction of errors in code works transmitted (received) and the indication of words that cannot be corrected. The GSM coding steps are followed, but with a higher redundancy, to this purpose four convolutional coding schemes (CS-1,...CS4) are foreseen for the GPRS, and nine modulation and coding schemes (CS-1,...CS9) for the EGPRS, generating different bit-rates.
- The interleaving of a Radio Block on four bursts in TDMA consecutive frames.
- The procedures for the detection of a congestion of the physical connection.
- The monitoring of the BCS field of the RLC blocks for error detection.
- The synchronisation procedures, including those for the adjustment of Timing Advance in mobiles.
- The procedures to monitor the radio link quality.
- The Cell selection and reselection procedures.
- The Power Control procedures of transmitters.

Concerning the services offered by the RLC/MAC block of **Figure 4,** the RLC part defines the procedures for a re-transmission of RLC blocks whose delivery was unsuccessful, in accordance to a selective scheme called ARQ (Automatic Repeat reQuest). The MAC part defines the procedures enabling a plurality of MS mobiles to share a common transmission means, which can also consist of different physical channels. The MAC functionality supplies an arbitration among the plurality of mobiles attempting to simultaneously transmit, taking care to avoid collisions. The MAC protocol enables a single mobile to use different physical channels in parallel. The RLC/MAC block has two operation methods, called unacknowledged and acknowledged, respectively, described later on.

Examining more in detail the functions of the RLC/MAC block, the RLC part performs the following functions:

- Execution of interface primitives enabling the transfer of LLC (LLC-PDU) protocol units between the LLC layer and the MAC part.
- Segmentation and re-assembly of the LLC-PDU units within the RLC blocks (Figure 8).
- Execution of Backward Error Correction (BEC) procedures that enable the selective re-transmission of non-correctable code works.
- Link adaptation procedures.

On the contrary, as for the MAC part it performs the following functions:

- Efficient multiplexing of data and control signalling both uplink and downlink, the multiplexing control residing on the network side. Being the multiplexing downlink governed by a scheduling mechanism, while uplink by the allocation of the means to single users selected time by time (e.g. in response to a service request).
- Solution of the dispute for access attempts to the channel, including the detection and recovery of collisions, in the transfer of packets originated by the mobile.
- Scheduling of access attempts to the mobile, including the queuing of access packets, in the transfer of packets ended towards the mobile.
- Implementation of priority mechanisms for access to the physical channel.

The description of the GPRS system made up to now with the aid of figures 1 to 8, has furnished an explanation of the general scenario in which the subject invention is framed; it is now necessary to restrict the context to the procedures of the MAC protocol governing the allocation of resources, because it is just matching the dynamic allocation of resources that the subject invention renders its effects. Dynamic allocation means that a particular transmission resource, consisting for instance of a PDCH channel and a relevant physical connection, is made time division shareable among more MS mobiles, each of them being engaged in an active session of data transfer, or of signalling, through the same transmission resource jointly assigned. The MAC protocol has also procedures for a fixed allocation of resources, but these have no direct impact on the present invention. In the GPRS system, as already said, the principal reason for a dynamic allocation of resources is that of a more extended use of the on-air interface, with the resulting possibility to offer the single user an instant bit-rate higher than in the past, observing the contracted service parameters. Additional reasons in favour of the dynamic allocation derive from the need to make a check of the traffic in order to be able to control at best the congestion situations and optmize the use of the network resources, increasing in both the cases the total effectiveness. To the above mentioned aims, the GPRS service supports the notion of service quality QoS (Quality of Service), in terms of: service priority (priority), reliability, delay in the transfer of an end-to-end packet (Gm-to-Gi), and medium and peak throughput compatibly with the multi-slot class. QoS parameters, together with the operation A, B, C, class and the multi-slot capacity, form part of a user profile communicated to the network in the phase of GPRS attack.

The sub-set of MAC procedures governing the dynamic allocation of resources, provides temporary connections on the physical layer, called TBF (Temporary Block Flow), which include memory buffers to house the queues of RLC/MAC blocks. Each TBF connection enables the point-to-point unidirectional transfer of data and user signalling within a cell, between the network and a mobile station MS, or vice versa. Control messages for the establishment/ abatement of a connection and the allocation/de-allocation of relevant support physical resources, for instance of TBF buffers, contemplates different opportunities capable of covering the whole survey foreseen in the packet transfer mode of the RR sublayer. For simplicity, it is here described a very limited survey of establishment/abatement of TBF connections and of the relevant operation modes. We can start from the establishment of a TBF uplink connection following a Packet Transfer originated by the mobile. In this case the mobile requires the assignment of a GPRS channel sending a PACKET CHANNEL REQUEST message including the resources requested for the transfer of packets to the network. In case of reception, the network replies with a PACKET UPLINK ASSIGNMENT message on the control channel allocating to the mobile the resources requested for the uplink transfer of packets. The resources include one or more PDCH channels and a TFI value (TBF identifier). The network does not assign any buffer in uplink direction (the buffer resides in the mobile). The network requires simply knowing the number of blocks that a MS mobile intends to transmit. We can now proceed examining the establishment of a TBF connection downlink following a Packet Transfer ended towards the mobile. In this case at the end of the paging procedure, the network sends the mobile a PACKET DOWNLINK ASSIGNMENT message in the Ready state on the control channel, with enclosed the list of PDCH channels allocated for the downlink transfer. A buffer, relevant to the downlink TBF, is purposely allocated to contain the RLC/MAC blocks to be sent.

A TBF is kept alive only for the duration of the transfer of one or more LLC protocol units to the right purpose of transferring the corresponding RLC/MAC blocks. The network assigns each TBF connection its own temporary identifier, called TFI (Temporary Flow Identity). The MS mobile shall assume that the TFI value is unique among TBF competitors in each direction, uplink or downlink. A RLC/MAC data block is identified to the TBF to which it is associated through its own field where the identifier TFI is written, and another field to indicate the uplink or downlink direction of the block. Should the RLC/MAC block be referred to a control message, a field is foreseen to indicate the message transmission direction and type. In the case of dynamic allocation, the header of each RLC/MAC block transmitted on a PDCH channel in "downlink" direction includes an additional field called USF (Uplink State Flag), which is used by the network in the form of a flag to control the time division multiplexing of different mobile stations on a physical channel PDCH in uplink direction. We can now better qualify the already mentioned PACKET UPLINK ASSIGNMENT message, sent by the network towards the mobiles, stating that it includes: the identifier TFI of the downlink/TBF buffer containing the control block carrying this message, the list of the allocated PDCH channels (time slots), and a corresponding USF value for each allocated channel. Three bits are foreseen for the USF field that enable to unambiguously discriminate up to eight users sharing a time-slot, also in the borderline case in which the single TBF buffer are associated all the eight time slots of a FDMA frame. A TBF can be of the "open ended" or "closed ended" type: in the first case the allocation takes place on an unlimited time basis, while in the second case the allocation is limited to a pre-set number of RLC blocks, this second opportunity can offer a more fair access to the transmission means during the highest loads of the service.

The network, at each RLC/MAC block period, iterates a non-standardised scheduling mechanism for the enabling/disabling of the USF flags univocally associated to TBF transmission queues allocated in uplink. The USF reserved for each PDCH allocated to a TBFj uplink are communicated to the MS mobile in the PACKET UPLINK ASSIGNMENT or PACKET TIMESLOT RECONFIGURE message. Of course the association of USF$j$ and TBF$i$ values shall be such to avoid any interference. The MS mobile performs the monitoring of all RLC/MAC downlink radio blocks of the PDCH assigned to it in uplink. When it detects the presence of a USF belonging to the set among those assigned to it, the uplink TBF is enabled to transmission on the subsequent radio uplink block of the PDCH.

In both the directions, the TBF resources are granted until data to be retransmitted are queued on the RLC/MAC layer. The release of the uplink resources is generally started by the mobile that counts in reverse direction the RLC blocks transmitted, but can also be started by the network. The mobile, after shipment of its last RLC block places in stand by, waiting for a PACKET UPLINK ACK/NACK message by the network. This message includes a RRBP field (Relative Reserved Block Period) whose value specifies a well defined uplink block in which the mobile must reply to the network sending a PACKET CONTROL ACKNOWLEDGEMENT message, and the release the TBF connection. Afterwards the network can re-utilize the TFI identifier of the TBF connection and the USF flag for another MS mobile.

The mechanism actuated through the pair of S/P (Supplementary/Polling) and RRBP (Relative Reserved Block Period) fields represents a derogation to the mechanism of the USF flags, mainly valid for control messages, in the cases in which the reply of the mobile has to be monitored (polling) by the network, or vice versa. More in particular, the S/P field indicates if the RRBP is valid or not; in case of validity the mobile shall transmit the radio block on the uplink frame in the same time-slot where the RRBP field has been received in the downlink frame, waiting for a number of TDMA frames specified by the coding of the RRBP field. The delay is relevant to the first TDMA frame (N) of the downlink block that contains the RRBP value. After receipt of a RLC/MAC block containing a valid value for RRBP, the mobile has no more the need for monitoring the USF field in the RLC/MAC block downlink transmitted just before the Uplink radio block reserved to the mobile.

On the contrary, concerning the multiplexing of mobile stations on PDCH channels that they share in the "downlink" direction, the procedures are more simplified since, contrarily to what happens for the uplink transfer, the intermediate of appropriate flags of the USF type is no more necessary. In fact, multiplexing is directly made by a scheduler that selects time by time the downlink TBF that shall transmit a RLC/MAC block on the current PDCH channel. The scheduler employs to this purpose a scheduling algorithm, non-standardised, which assigns the access permit to the single TBF on the physical resources (PDCH), identifying the TBF through the relevant TFI.

The release of a TBF downlink connection is started by the network that sends a RLC data block with the FBI field (Final Block Indicator) at the true logic value, and with a valid value in the RRBP field. This enables to start a polling of the mobile for the reception of a PACKET DOWNLINK ACK/NACK final message. Two appropriate timers signal the different instants at which the assignment of the current TBF looses its validity, separately for the mobile and the network. Immediately after the loss of validity the current TFI identifier can be re-employed by the network.

**Open problems in the background art**

The previous overview on the GPRS system highlighted the absence of a standardisation in the scheduler operation that plans the transmission of RLC/MAC blocks (but also LLC ones) in both transmission directions, employing the TFI identifiers in the downlink scheduling and the USF flags in the uplink scheduling. The planing to consider also the polling in the two directions. This means that the GSM standard leaves the research of a proprietary algorithm more suitable to the purpose to the free initiative of manufacturers.

The scheduling of transmissions is only one of the useful elements in reaching the negotiated QoS, the other elements are the control procedure on the admission of connections (admission control), and the shaping policy (shaping) of the traffic. These problems engendered by the QoS have been historically faced and differently resolved in packet switching base networks. In this sector the major part of the studies concerns the B-ISDN networks (Broadband Integrated Services Digital Network), largely based on ATM technique (Asynchronous Transfer Mode).

The invention that shall be describes does not intend to solve the problem of how satisfying at best the QoS service quality negotiated by the different active users within a cell, but it is mainly addressed to the resources scheduling activity on the physical layer, with the aim of correcting some allocation defects present in the known art. Apart from considerations on the QoS, the new scheduling even if indirectly, can have an impact on one or more QoS parameters. This said, the scheduling activity, either in ATM or in GPRS environment, consists in assigning an order in the transfer of data to different users, in the aim of satisfying the contracted service. In the particular case of the present invention, the contracted service corresponds to the number of time-slots of the multi-slot class. This restriction makes the invention to affect the RLC/MAC protocol only, placed in direct contact with the physical layer.

The article by Jonathan Sau and Chris Sholefield, under the title "Scheduling and Quality of Service in the General Packet Radio Service", published by IEEE in January 1998, highlights some different problems encountered by the scheduling algorithms in an ATM and GPRS context. The different problems originate from the fact that in the GPRS, contrarily to ATM, the scheduling is applied to the full-duplex transfer of data through an on-air interface. The characteristics of the on-air interface reflect the particular transmission means consisting of the radio channel. The operation of such an interface requested the specification of an ad hoc protocol, namely the RLC/MAC layer, which is not acknowledged in the interfaces of ATM networks. It is worth mentioning some points indicated under paragraph 3.1 of the mentioned paper. They verbatim recite: The scheduling in GPRS differs from ATM in some aspects:

1. On the on air interface the MAC protocol is employed both for the solution of the disputes in the access to a packet channel, and for the allocation of resources. In addition to the RLC/MAC blocks for data it is also necessary to schedule the blocks for signalling messages.
2. This point concerns the need to schedule the transmission of some MAC signalling messages before the delay class is known, this means that the above mentioned messages must have the maximum priority.
3. There is some dependence between the scheduling of MAC signalling messages in the uplink and downlink direction. (This fact results from what already said concerning the use of S/P and RRBP fields).
4. The scheduling shall keep into account the multi-slot capacity of a mobile. For instance, if eight RLC/MAC radio blocks have to be sent to a mobile capable of using only two time-slots of a single TDMA frame, the BSS subsystem shall send only two blocks at a time over the block duration, even if there are more time-slots available.

The conclusion we can reach is that scheduling methods developed up to now for ATM networks cannot be immediately transferred to the GPRS system, giving value to the substantial novelty hold by the packet switching service in mobile networks. A serious attempt to adapt two typically ATM scheduling methods to the new GPRS context is described in the paper, already mentioned above, by Jonathan Sau and Chris Sholefield. The first of the two methods is called SPS (Static Priority Scheduling) and the second MED (Modified Earliest Deadline). For briefness sake, the first method only shall be examined, as representing the problems that the numerous ATM derived scheduling methods entrain. The SPS method aims at satisfying at best the QoS parameters negotiated for the end-to-end delay. For each transmission direction four buffers are provided to house the queues of the RLC/MAC data blocks, each queue is associated to one of the four delay classes foreseen in the GPRS standard, the lower is the number assigned to the queue and the smaller is the associated delay. A fifth queue is added to the four ones for signalling messages and it is assigned the lowest number. A fixed (static) priority is assigned to each queue, which is as higher as lower is the number assigned to the queue. The messages reaching the scheduler in the form of RLC/MAC blocks are appended to the queue corresponding to their delay class. Each message is allocated up to the number of time-slots specified in the multi-slot class of the mobile transmitting the message. In each scheduling step, having 4 TDMA frames duration, the queues are served in increasing number order, and within each queue the messages are served in FIFO mode (First-In-First-Out). What just said requires the following clarification: when a subsequent time-slot is available, a class $i$ buffer will receive the service only if all the class $j$ with ($j < i$) buffers are empty. The two mentioned methods have been tested with traffic models including a variegate number of cases typically Internet, in which packets of different size are represented having different transmission frequencies. The comparative results of these simulations have no importance for the purposes of the invention, since, contrarily to the objects of the invention, the two tested methods employ two different scheduling modes having a common service order of queues put in priority relation with one or more QoS parameters. These ATM derived methods reason in terms of messages and thus seem to be inspired by protocols well higher than the physical layer. The same inevitably go through a crisis when the scheduling target is less tied to the QoS and closer to the assignment mechanics of the single time-slots. Taking as an example the SPS scheduler, when the QoS parameter of end-to-end delay is not considered, all the priority queues degenerate in a sole queue, and the scheduler operates as a simple FIFO scheduler. It is demonstrated that a FIFO scheduler goes through a crisis if the link is heavily employed, this because when there are many packets of small size waiting for a long time after large size packets the total average delay results increased from the statistical point of view. The analysis of how the different ATM derived scheduling algorithms degenerate once divested of the targets on the QoS is only a sterile exercise, because the same have been conceived just to reach quality targets. However, a similar analysis could demonstrate the inadequacy of these algorithms in fairly treating the different MS mobiles in the exploitation of the physical layer resources differently allocated. To this purpose, it is more effective to analyse the behaviour of a scheduling algorithm largely independent from quality targets, and that is to historically count among the first and more employed in the different sectors of electronic applications, that is the Round Robin algorithm. In its simplest form, a Round Robin scheduler assigns at times to each user the permit to have access to a resource; once the tour is ended the permit returns to the first user, and so on. The deriving advantage is that of simplicity and guarantee to be able to supply a given throughput to each user. Seemingly, the Round Robin scheduler seems fit with equity, since it treats all the users in the same manner; this can be true in some operational contexts of base networks, but the following examples will demonstrate that in GPRS environment, equity is not generally maintained.

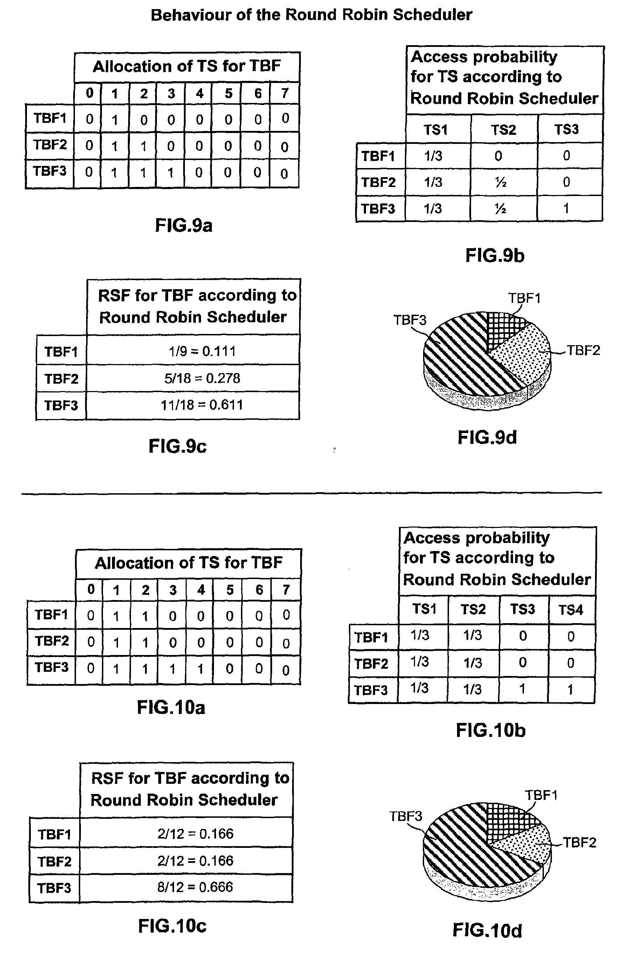

The table in Figure 9a shows a simplified scenario in which three MS mobiles identified by a same number of connections TBF1, TBF2, and TBF3 share the radio resource assigned to the GPRS service consisting of 3 out of the 8 time-slots TS numbed 0 to 7. The mobile TBF1 is assigned the TS 1, the mobile TBF2 is assigned the TS 1 and 2, and the mobile TBF3 is assigned the TS 1, 2 and 3. The particular allocation of Figure 9a shall not be considered as exceptional, it reflects a situation of wide generality in which some GPRS time-slots are more employed versus some others. The Round Robin scheduler assigns each TBF allocated to a time-slot the same access probability to the radio channel, applying the following relation:

$$\textit{Access probability of a TBFi to a TSj} = \frac{1}{\textit{Number of TBF allocated on TSj}} \tag{1}$$

The table in **Figure 9b** shows in fact the probability (1) for each TBF and for each TS. A parameter that better helps understanding the equity of the scheduler in guaranteeing the access to shared resources is the relative scheduling frequency of each TBF. This parameter, known under the RSF acronym (Relative Scheduling Frequency), is given for the Round Robin scheduler by the following expression:

$$RSF(TBFi) = \frac{\sum\limits_{TS \text{ allocated to } TBFi} \textit{Access probability for TS}}{\textit{Total number of TS allocated to all TBF}} \tag{2}$$

The table in **Figure 9c** and the corresponding cake graph of **Figure 9d** show the trend of the (2) for each TBFi. As it can be noticed, the RSF parameter is not proportional to the relevant number of time-slots allocated in total to a TBFi, but it is lower than the proportional share for TBF1 and TBF2 and higher for TBF3. If there were proportionality, RSF values would have been those indicated in **Figure 11c.** This means that in a multi-slot context, in which the QoS targets are not considered at the beginning, the Round Robin scheduler penalises the mobiles availing of less shared resources, in favour of the more well off ones.

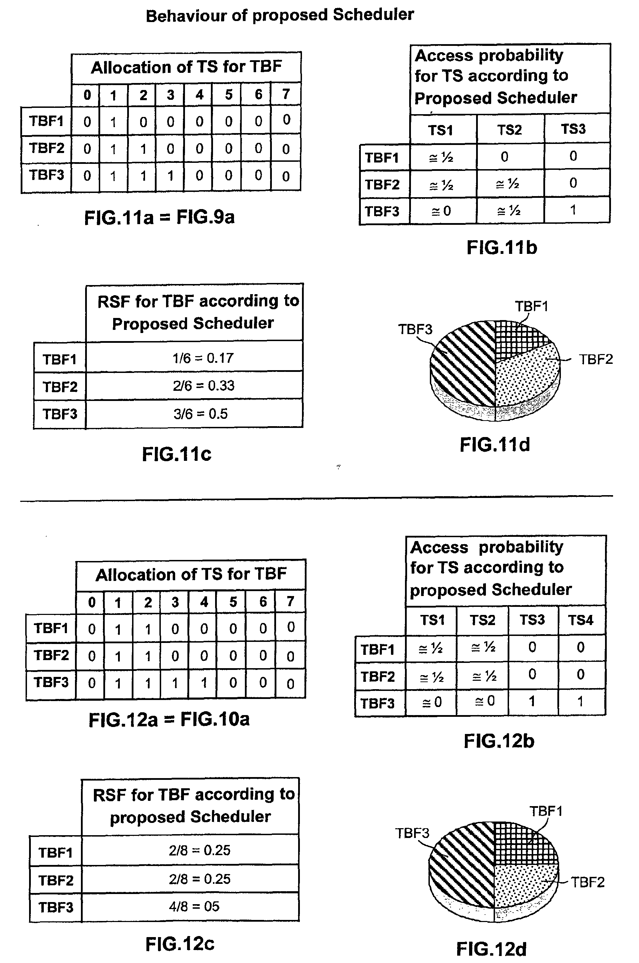

The tables in Figures **10a, 10b, 10c** and the diagram in **Figure 10d** are referred to a scenario differing from that of Figures 9a ÷ 9d due to the fact that two users have equal shared resources while the third one holds the double. The previous situation penalized on the RSF parameter is reconfirmed in this new scenario for the two less well off users.

The network makes only a check that a given number of users per time-slot allocated to the GPRS service is not exceeded. The network can therefore allocate to the single MS mobile a number of time-slots, included within its multi-slot capacity, trying to meet a given peak bit-rate, however it does not guarantee an average bit-rate to the mobile, though the average throughput is a parameter foreseen by an appropriate QoS class. The average bit-rate for a TBF connection is proportional to its RSFi parameter.

The known art consisting of the Round Robin scheduler certainly does not help resolving this problem, on the contrary it privileges the relative scheduling frequency (RSF) of the users having more allocated channels, and reduced the average bit-rate of users with a few shared resources in favour of the first ones. What said, finds immediate confirmation in the comparison between the cake graphs of **Figures 9d** and **10d**, in which we can see how the aggregate area TBF1 + TBF2 corresponding to RSFi parameters of the two less well off connections, is compresses as the unevenness in the sharing of time-slots increases. Having assumed the RSFi parameter as indicative of the average bit-rate (at equal coding scheme and radio conditions of the channel), the above mentioned considerations demonstrate that the scheduler Round Robin, assigning the use of the radio channel matching a generic time-slot j in equiprobable way between the TBF*i* sharing the time-slot *j*, is not fair at all in a GPRS context, and consequently it appears inadequate in the attempt of assuring that the RSF parameter is proportional to the number of TS allocated to the TBF connection *i*.

**Objects of the invention**

Therefore, scope of the present invention is to overcome the drawbacks of the scheduling methods according to the known art, where applied to the time-slots of a TDMA radio frame, and to indicate a scheduling procedure of transmission permits having equity characteristics in the exploitation of shared resources, in the attempt of guaranteeing a RSF*i* proportional to the number of TS negotiated by the connection *i* with the network, that is an RSF*i* proportional to the negotiated peak transmission speed.

Further object of the invention is to indicate another embodiment of the procedure that, while maintaining the above-mentioned equity characteristics, tries to guarantee an RSF*i* proportional to the number of TS requested by the mobile to the network on the moment the connection *i* is established, that is an RSF*i* proportional to the peak transmission speed requested and not otherwise only negotiated.

**Summary of the invention**

To attain these objects, scope of the present invention is a scheduling procedure of transmission permits, as described in claim 1. With this teaching, it results for the RSF*i* parameter:

$$RSF(TBFi) = \frac{Number\ of\ allocated\ TS\ for\ TBFi}{\sum_{j=1,\ldots,\ NUMBER\ OF\ TBF} Number\ of\ alloted\ TS\ for\ TBFj}$$

(3)

From claim 1 a substantial difference emerges between the procedure of the invention and the Round Robin method, and in particular: while the scheduling according to the Round Robin method employs a rigidly deterministic mechanism to assign to transmission queues the permits for the exclusive use of time-slots, mechanism that foresees to alternatively assign among the transmission queues sharing the time-slots the permits available in each elementary scheduling step, the scheduling according to the procedure of the invention grounds on the assignment of the highest possible number of permits among those available in each elementary scheduling step to a transmission queue selected in a completely random manner.

The diversity in the basic presuppositions of the two scheduling methods reflects on the behaviour characteristics of the same. More in particular: the scheduling mechanism of the Round Robin method is so elementary such to result insensitive to the factors that can limit the number of transmission permits assigned to a transmission queue; such as for instance: the length of the queue of transmission permits, the maximum number of permits that can be assigned, the number of permits already assigned, the number of packets still to be transmitted, etc. But what that at a first analysis could appear an advantage of the Round Robin method, and actually, it is its Achilles' heel because the stiffness of the scheduling mechanism does not contemplate any variation of the access probabilities to time-slots in situations otherwise penalized. This does not result for the procedure of the invention, which, trying to force to the maximum extent the permit assignment to the randomly selected queue, soon clashes the physical restrictions imposed by the system. Notwithstanding, the fact to privilege the relevant scheduling intensity represents, as we shall see in short, the force point of the procedure of the invention.

Further object of the invention is another embodiment of the procedure, as described in an appended claim. With the additional teaching supplied by the variant, for the RSF$i_{var}$ parameter it results:

$$RSF(TBFi)_{var} = \frac{Number\ of\ TS\ allocated\ for\ TBFi \times Wi}{\sum_{j=1,\ldots,\ NUMBER\ OF\ TBF} Number\ of\ TS\ allocated\ for\ TBFj \times Wj}$$

(3')

Also in the case of the variant, the scheduling procedure tries to meet the proportionality requirement of the RSF$i_{var}$ parameter with the peak transmission speed, but employs a weight *Wi* to give the TBF*i* higher priority, in order to satisfy the requirement on the requested speed, generally higher than the negotiated one.

**Advantages of the invention**

The scheduling procedure according to the invention, thanks to the random selection of transmission queues together with the particular permit assignment method, does not benefit any queue to the detriment of the other ones and enables the mobiles an access to the time-slots shared in the radio frame, much more fair than the one that can be obtained with the methods of the known art, because the number of permits assigned to each transmission queue results averagedly proportional according to the (3) at the peak transmission speed negotiated by each mobile with the network. The mean has to be intended as extended on more scheduling steps.

The advantage of higher equity clearly appears from the comparison of **Figures 9a ÷ 9d** of the Round Robin scheduler with the corresponding **Figures 11a ÷ 11d** of a scheduler operating according to the procedure of the present invention, the two groups of figures referring to a common allocation table shown in **Figures 9a and 11a.** The visual comparison of the two cake diagrams in **Figures 9d and 11d** clearly shows how in **Figure 11d** of the proposed scheduler the areas representing the RSF values of TBF1 and 2 result more extended than the corresponding areas in **Figure 9d** of the Round Robin scheduler, causing a decrease of the TBF3 area. The table in **Figure 11c** shows that for the proposed scheduler RSFi values representing the relative scheduling frequency calculated according to the (3) are proportional to the number of time-slots allocated to each TBFi, through a 1/6 proportionality constant. In equivalent words, this means that transmission permits are assigned to the mobiles in proportion to the peaks transmission speed negotiated by each mobile, contrarily to what appears from the table in **Figure 9c** relevant to the Round Robin scheduler. On the contrary, the table in **Figure 9c** shows that for the Round Robin scheduler, RSFi values are proportional to the single access probability to the time-slots, through a 1/3-proportionality constant. This means that transmission permits are assigned to the mobiles without meeting the criterion of proportionality at the peak transmission speed negotiated by each mobile. The table in **Figure 11b** relevant to the proposed scheduler, shows that matching each time-slot TS the access probability al TS is not equally distributed among all the buffers TBFi allocated on that TS, contrarily to what appears in **Figure 9b** relevant to the Round Robin scheduler. The comparison of these last tables shows that in the scheduler of the invention the access probability is increased at time-slot 1 of the TBF1, less well off, to the detriment of the access probability to the same time-slot by the TBF3, more well off. In practice, it is subtracted something to "rich" users to give it to "poor" ones. Identical conclusions can be obtained from the comparison of **Figures 10a ÷ 10d** of the Round Robin scheduler with the corresponding **Figures 12a ÷ 12d** of the proposed scheduler.

The behaviour highlighted for the scheduling procedure according to the invention, remedies to the lacking measure of the network when it first allocates the resources to the single user without considering the global situation of the other users on the different time-slots. The procedure of the invention has included an automatism capable of varying the access probability to the shared time-slot, in the direction to correct allocations penalized. This automatism is additionally perfected by another embodiment of the procedure, in order to enable a higher transmission speed of the mobiles submitted by the network to a policy of resource allocation otherwise penalized.

**Brief description of figures**

The present invention together with further objects and advantages thereof may be understood with reference to the following detailed description of an embodiment of the same, taken in conjunction with the accompanying drawings, in which:

- **Figure 1** shows a very general view of an integrated telephone network including GPRS networks.
- **Figure 2** shows the functional architecture of a GSM network supporting the GPRS service.
- **In Figure 3** shows a "Transmission Plane" including the protocol stacks foreseen at the main interfaces of Figure 2.
- **Figure 4** shows the architecture of the protocols foreseen in some layers of the Transmission Plane of Figure 3 engaged in the communication between the MS mobiles and the SGSN node.
- **Figures 5 to 8** show the formats of some serial information flows crossing the layers of Figure 4.
- **Figures 9a ÷ 9d and 10a ÷ 10d** show two groups of tables concerning the operation of a scheduler of the known art.
- **Figures 11a ÷ 11d and 12a ÷ 12d** show two groups of tables concerning the operation of a scheduler according to the present invention.
- **Figure 13** shows a block diagram of a BSS sub-system according to the present invention.
- **Figure 14** shows a block diagram of the BSC block of Figure 13 with the detail of the signals exchanged among the different blocks included in the BSC block.
- **Figure 15** shows the structure of the buffers arid records included in the TBF MANAGER block of Figure 14.

- **Figure 16** shows the structure of the buffers and records included in the Downlink Scheduler block of Figure 14.
- **Figure 16a** shows a record used by the Downlink Scheduler block of Figure 16.
- **Figure 17** shows the structure of the buffers and records included in the Uplink Scheduler block of Figure 14.
- **Figure 18** shows a particular filling mode of a generic buffer UL_Buffer_TS(.) of Figure 17.
- **Figures 19a, 19b and 19c** show a very general flow chart of the scheduling procedure of the present invention.
- **Figures 20a and 20b** show a flow chart relevant to the filling of the buffers included in the Downlink Scheduler block of Figure 16.
- **Figures 21a and 21b** show a flow chart relevant to the decisions made by the Downlink Scheduler block of Figure 16.
- **Figures 22a and 22b** show a flow chart relevant to the filling of buffers included in the Uplink Scheduler block of Figure 17, in compliance with the filling method indicated in Figure 18.
- **Figure 23** shows a flow chart relevant to the decisions made by the Uplink Scheduler block of Figure 17.
- **Figures 24a and 24b** show a flow chart relevant to the decisions made by the TBF MANAGER block of Figure 15.
- **Figures 25a, 25b, and 25c** show the state of buffers and records included in the TBF MANAGER, Downlink Scheduler, and Uplink Scheduler blocks of figures 15, 16, and 17 matching a practical example of implementation of the scheduling procedure of the present invention.
- **Figure 26** shows a sequence of tables showing the time evolution of the state of buffers and records included in Downlink Scheduler, and Uplink Scheduler blocks of figures 25b and 25c of the practical implementation example.

**Detailed description of a preferred embodiment of the invention**

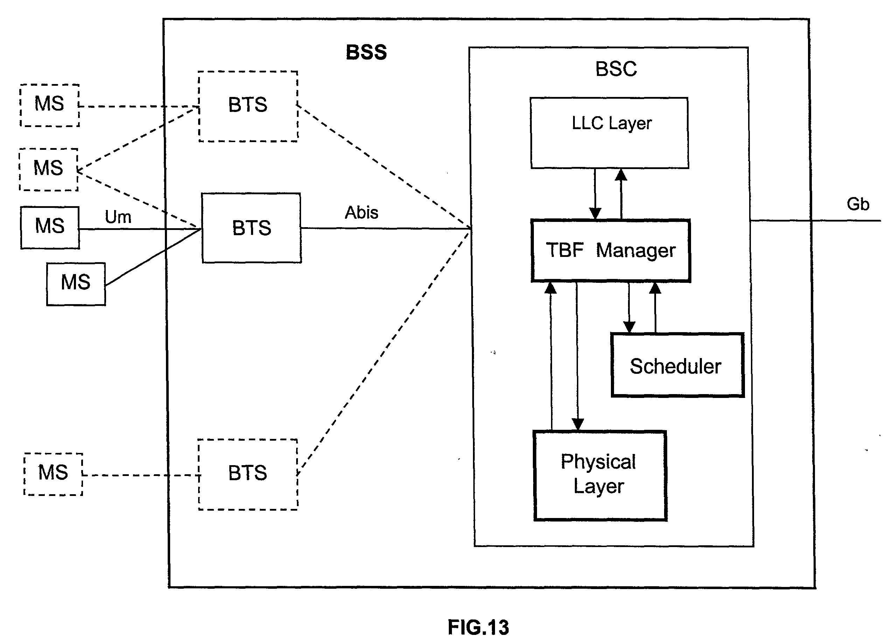

Figures 1 to 12 have already been commented. **Figure 13** shows a BSS block connected to MS blocks. The BSS block includes a BSC block and some BTS blocks. The BSC block includes in turn a block called LLC Layer, a Physical Layer block, a TBF MANAGER block, and a Scheduler block. BTS (Base Transceiver Station) blocks represent GSM-GPRS base stations connected through an on-air interface Um to a plurality of MS mobile stations (Mobile Station), and through an Abis interface at the base station controller BSC (Base Station Controller). The latter is connected to the SGSN block of Figure through a Gb interface. The LLC Layer block has a bi-directional connection with the TBF MANAGER block that, in turn has a bi-directional connection with the Scheduler block and with the Physical Layer block. The view of Figure 13 is intentionally general because its scope is that to locate the invention within the system. As we shall see, the invention is located in the Scheduler block, but also the TBF MANAGER block is involved. For the description of the operation of the other blocks and interfaces reference shall be made to the relevant specifications of the GSM in phase 2+.

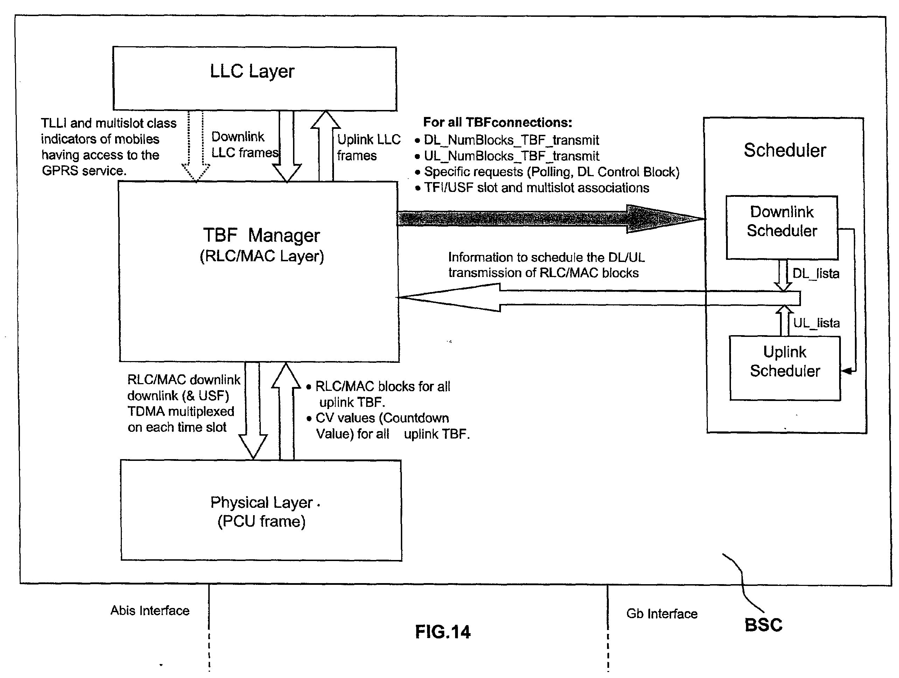

With reference to **Figure 14**, it can be noticed that the LLC block Layer sends the following information to the TBF MANAGER block:

- LLC frames for buffered connections DL_TBF allocated for the downlink transfer;
- Countdown values CV (Countdown Value) indicative of the state of buffered connections UL_TBF allocated for the uplink transfer;
- TLLI identifiers and multi-slot class of the mobiles admitted to the GPRS service.

The LLC Layer block receives in turn from the TBF MANAGER block, the LLC frames for the uplink connections. The TBF MANAGER block sends the Physical Layer block the RLC/MAC radio blocks with the associated USF multiplexed for TDMA on each time slot. The Physical Layer block sends the TBF Manager block the RLC/MAC radio blocks coming from the uplink connections.
The TBF MANAGER block transmits the following information to the Scheduler block:

- a DL_NumBlocks_TBF_transmit value for each DL_TBF connection;
- a UL_NumBlocks_TBF_transmit value for each UL_TBF connection;
- specific requests, for instance for the polling or sending of downlink control blocks;
- a tabular information with the indication of the time-slots of the multislot class assigned to each connection DL_TBF and UL_TBF (indicated by their common identifier TFI), and the values of USF flags to be used in downlink.

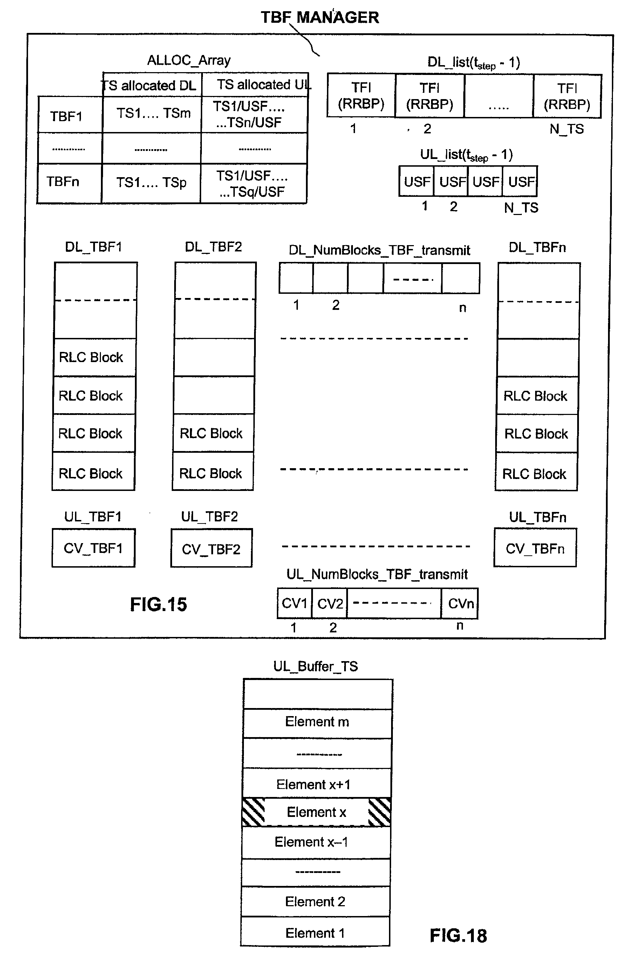

The Scheduler block includes a Downlink Scheduler block and an Uplink Scheduler block. The Downlink Scheduler block has a connection with the block beneath and generates a scheduling information DL_lista that is sent to the TBF MANAGER block for the scheduling of the transmissions of RLC/MAC blocks in downlink. Likewise the Uplink Scheduler block generates a scheduling information UP_lista that is sent to the TBF MANAGER block for the scheduling of the transmission of the RLC/MAC blocks in uplink.
With reference to **Figure 15,** it can be noticed that the TBF MANAGER block includes a memory ALLOC_Array; n buffers DL_TBF1, DL_TBF2, ...., DL_TBFn; n buffers UL_TBF1, UL_TBF2, ...., UL_TBFn; and the following records: DL_NumBlocks_TBF_transmit, UL_NumBlocks_TBF_transmit, DL_lista($t_{step}$ - 1), and UL_lista($t_{step}$ - 1 ). The memory ALLOC_Array contains the tabular information that shall be supplied to the Scheduler downlink and to the Scheduler uplink. A buffer DL_TBF*i* con (*i* = 1,..., n) is allocated to a mobile *i* that obtains the access to the GPRS service in its multi-slot capacity, and is used to contain the queue of RLC/MAC blocks, either data or control ones, the network intends to downlink transmit towards the mobile *i*. The DL_NumBlocks_TBF_transmit record has n positions as are the DL_TBF buffers it is associated to, in each position *i* of this record, the current number of RLC blocks contained in buffer DL_TBF*i* is stored. A buffer UL_TBF*i* with (*i* = 1,..., n) is allocated to a mobile *i* that obtains the access to the GPRS service, and is used to contain the CV*i* number of the RLC/MAC blocks, either data or control ones, the mobile *i* intends to transmit in uplink towards the network. The UL_NumBlocks_TBF_transmit record has n positions as are the buffers UL_TBF it is associated to, in each position *i* of this record, the CV*i* content of buffer UL_TBFi is stored.

In **Figure 15** we can notice a difference in representation within the TBF MANAGER block between the DL_TBF*i* buffers and the UL_TBF*i* buffers. The DL_TBF*i* buffer physically contains the RLC/MAC radio blocks that have to be transmitted when the TBFi is scheduled. On the contrary, the UL_TBF*i* buffer contains an indication of the CV*i* number of RLC/ MAC radio blocks that the uplink TBFi intends to transmit. This information is necessary to the uplink scheduler to operate.

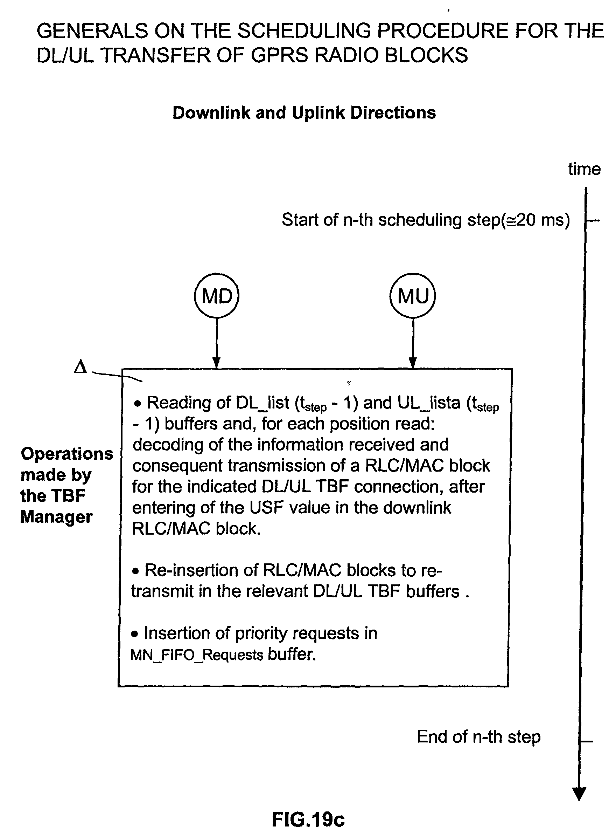

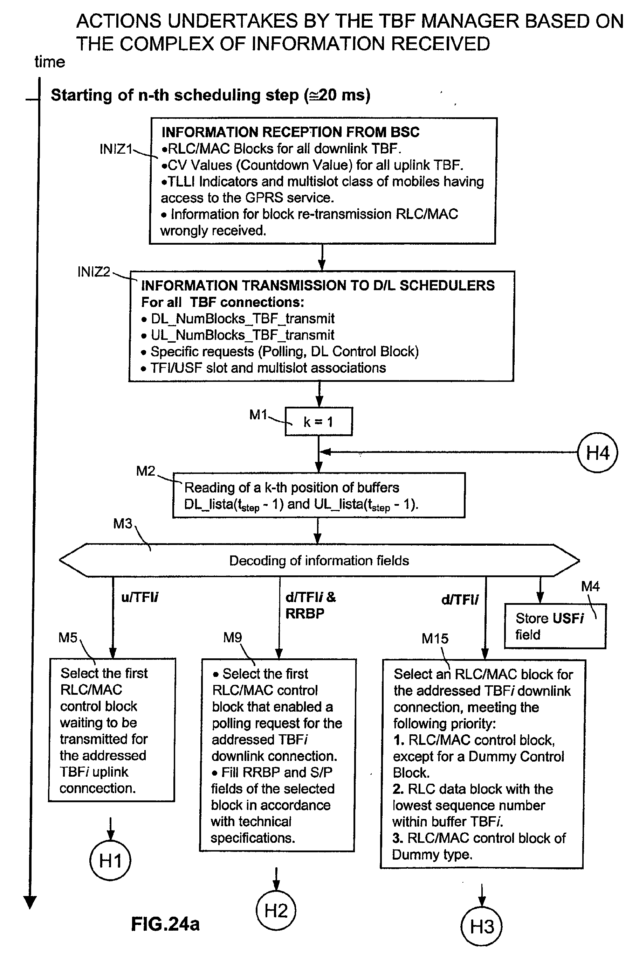

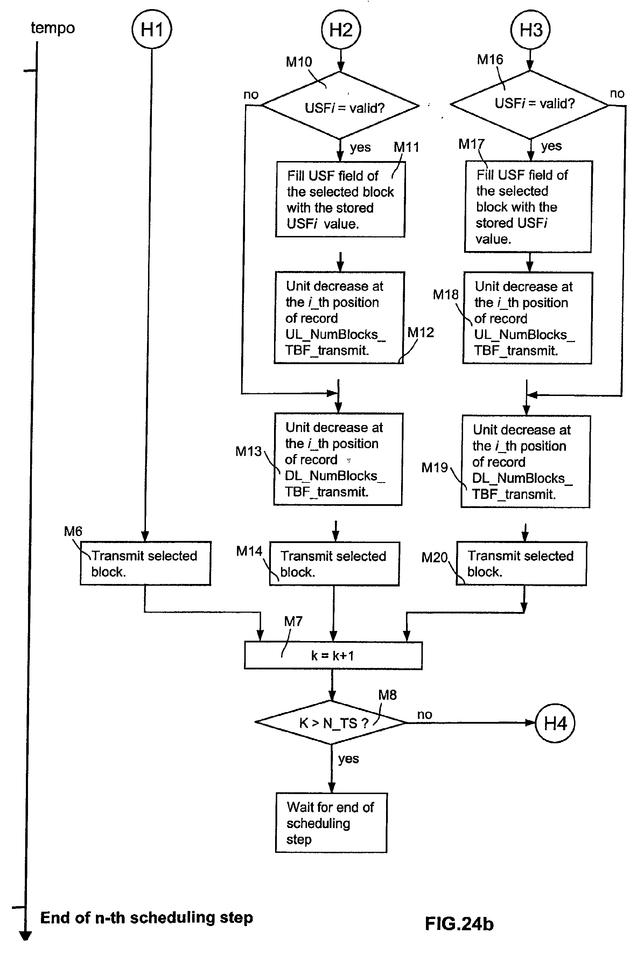

The DL_lista($t_{step}$ - 1 ) and UL_lista($t_{step}$ - 1) records have each N_TS positions, as are the time-slots per TDMA frame currently assigned to the GPRS service. In each position *j* of the DL_lista($t_{step}$ - 1) record, the value of the identifier TFI*i* of the DL_TBF*i* and/or UL_TBF*i* connection scheduled for the transmission matching the present time-slot is stored. In each position j the identifier TFI can be accompanied by a valid value of the RRBP field used for the polling. In each position j of the UL_lista($t_{step}$ - 1) record, the value of the USF flag that shall be included in the homonym field of the RLC/MAC block mentioned above is stored. The use methods of the information contained in DL_lista($t_{step}$ - 1) records and UL_lista($t_{step}$ - 1) by the TBF MANAGER block shall be briefly described with reference to **Figure 19c**, and more in detail with reference to **Figures 24a and 24b**.

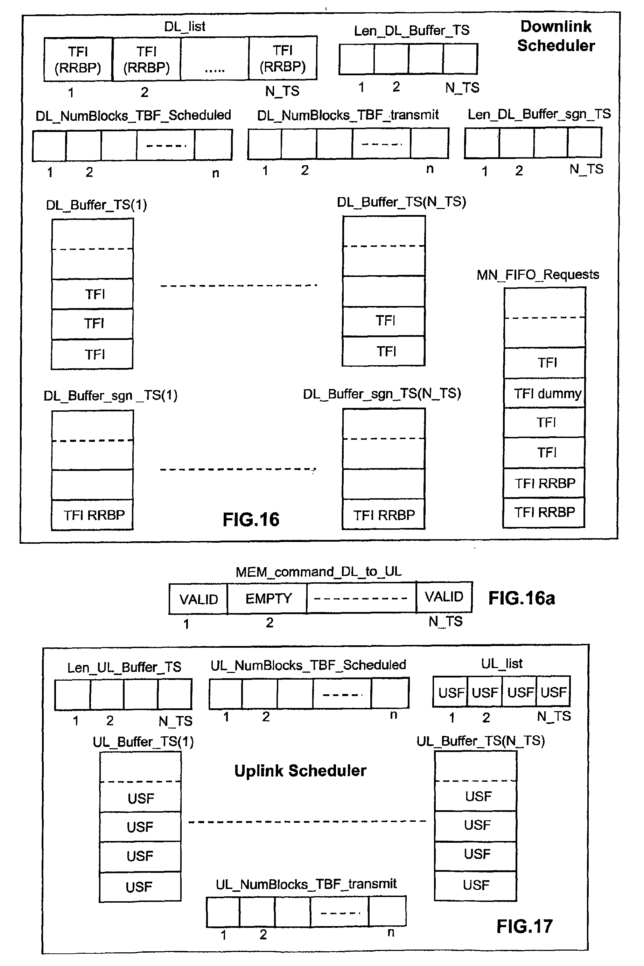

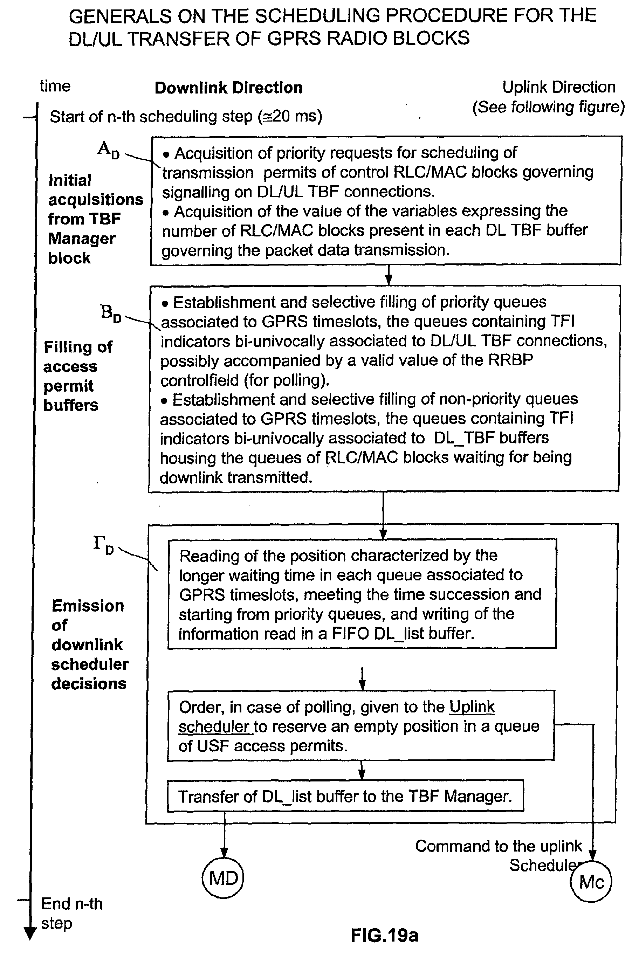

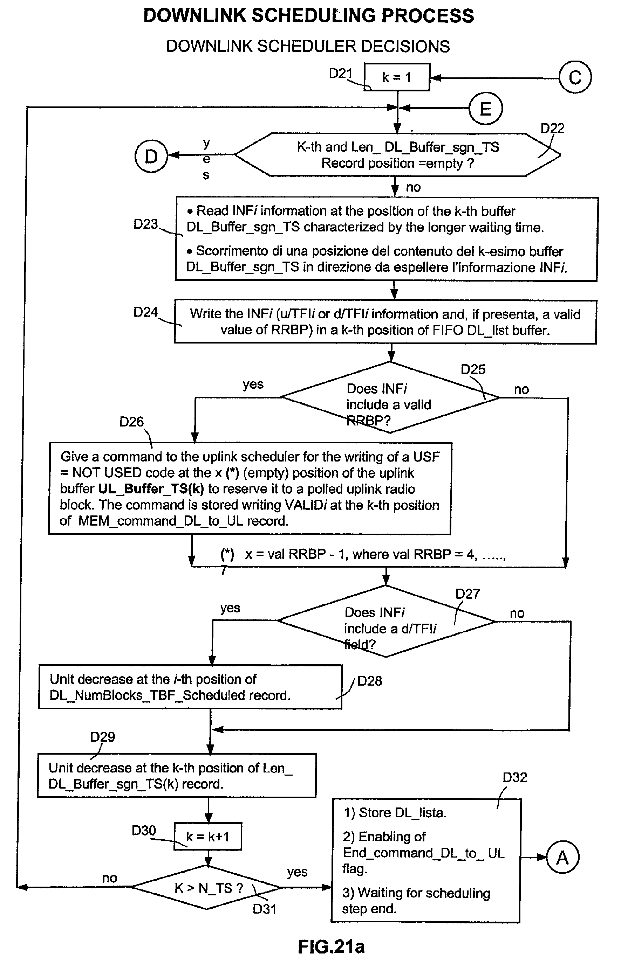

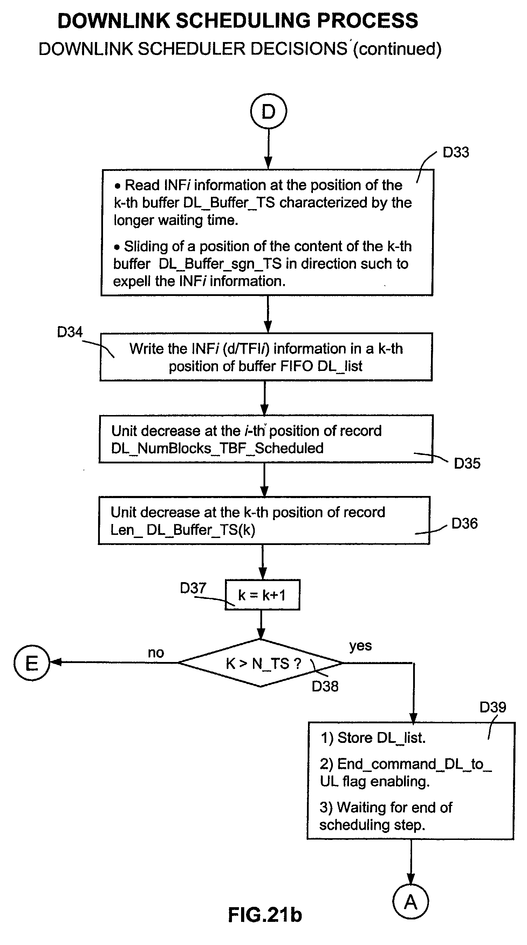

With reference to **Figure 16**, it can be noticed that the Downlink Scheduler block includes buffers and records. Records are as follows: DL_NumBlocks_TBF_transmit, DL_NumBlocks_TBF_Scheduled, LEN_DL_Buffer_TS, LEN_DL_Buffer_sgn_TS, and DL_list. The DL_NumBlocks_TBF_transmit and DL_NumBlocks_TBF_Scheduled records have n positions; the first one has already been mentioned, its repetition helps making the operation of the Downlink Scheduler from the TBF MANAGER block independent. The remaining records have N_TS positions, as are the time-slots per TDMA frame currently assigned to the GPRS service. Buffers included are: a first group of buffers DL_Buffer_sgn_TS(1), ..., DL_Buffer_sgn_TS(N_TS); and a second group of DL_Buffer_TS(1), ..., DL_Buffer_TS (N_TS) buffers, and a single buffer MN_FIFO_Requests. Each buffer of the first and second group is bi-univocally associated to a time-slot currently allocated to the GPRS service. The MN_FIFO_Requests buffer is a buffer that stores in the arrival order the priority requests received from the TBF MANAGER block for a given data connection DL_TBF*i* or UL_TBF*i*. The requests contain the identifier TFI, possibly accompanied by a valid value of the RRBP field, of control blocks containing signalling messages. The above-mentioned requests can also contain TFI identifiers for some convenience control blocks, called "Dummy", relevant to a message that the network sends to the mobile when it desires to engage the connection downlink but it has no effective blocks to transmit. The MN_FIFO_Requests buffer is read as a FIFO memory and the requests read are time by time inserted in the buffers DL_Buffer_sgn_TS of the first group, following a filling strategy that shall be indicated in detail describing **Figure 20a.** Each buffer DL_Buffer_TS(*j*) of the second group contains the queues of the identifiers TFI of one or more buffers DL_TBF scheduled for the downlink transmission of the next RLC blocks, following a filling strategy that shall be indicated in detail describing **Figure 20b.** Each position *j* of the DL_lista record contains the information that entered first the buffer DL_Buffer_sgn_TS(*j*) or DL_Buffer_TS(*j*) when the first one is missing, as briefly described with reference to **Figure 19a,** and in more detail with reference to **Figures 21a and 21b.** Each position *i*-th of the DL_NumBlocks_TBF_Scheduled record contains the number of RLC blocks already scheduled fir the DL_TBF*i* buffer. Each position *j* of the LEN_DL_Buffer_TS record contains the current number of TFI identifiers contained in the DL_Buffer_TS(*j*) buffer. Each position *j* of the LEN_DL_Buffer_sgn_TS record contains the current number of TFI identifiers contained in the DL_Buffer_sgn_TS(*j*) buffer.

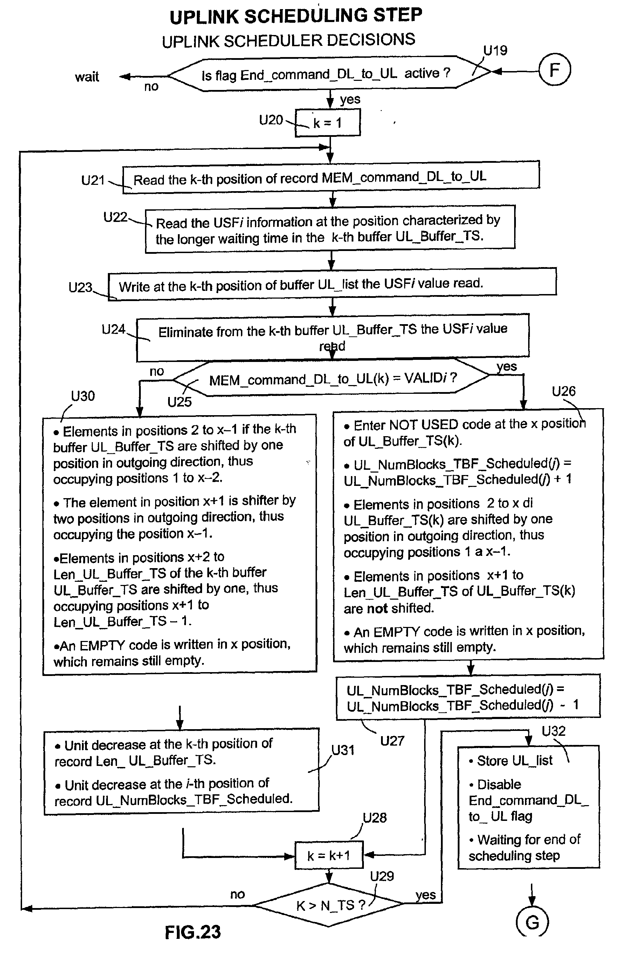

With reference to **Figure 16a,** it can be noticed a record called MEM_command_DL_to_UL having N_TS positions whose scope is to store the need of valid values of the RRBP field withdrawn at the current scheduling step by the N_TS buffers DL_Buffer_sgn_TS. Matching a valid RRBP value for a *j*-th connection TFI*i* a VALID*i* code is written in the *j*-th position of the MEM_command_DL_to_UL record to be used as command to transfer to the uplink Scheduler to reserve a free position in the corresponding *j*-th buffer used for the scheduling of transmission permits uplink. In lack of writing, the *j*-th position of the MEM_command_DL_to_UL record remains in the EMPTY condition. The detail on the treatment of the subject record is shown with Figures 21a and 23.

With reference to **Figure 17**, it can be noticed that the Uplink Scheduler block includes buffers and records. Records are as follows: UL_NumBlocks_TBF_transmit, UL_NumBlocks_TBF_Scheduled, LEN_UL_Buffer_TS, and UL_lista. The UL_NumBlocks_TBF_transmit and UL_NumBlocks_TBF_Scheduled records have n positions; the first record has already been mentioned, its repetition serves to male the operation of the Uplink Scheduler independent from the TBF MANAGER block. The remaining records have N_TS positions, as are the time-slots per TDMA frame currently assigned to the GPRS service. The buffers included are those of a third group UL_Buffer_TS(1), ..., UL_Buffer_TS(N_TS), each one being bi-univocally associated to a time-slot currently allocated for the GPRS service. Compared to the downlink Scheduler of Figure 16 we notice the absence of buffers for the scheduling of transmission permits of control blocks, this because the control of the signalling for the complex of MS mobile stations is of course carried out by the network that avails of the downlink trunk to perform its control.

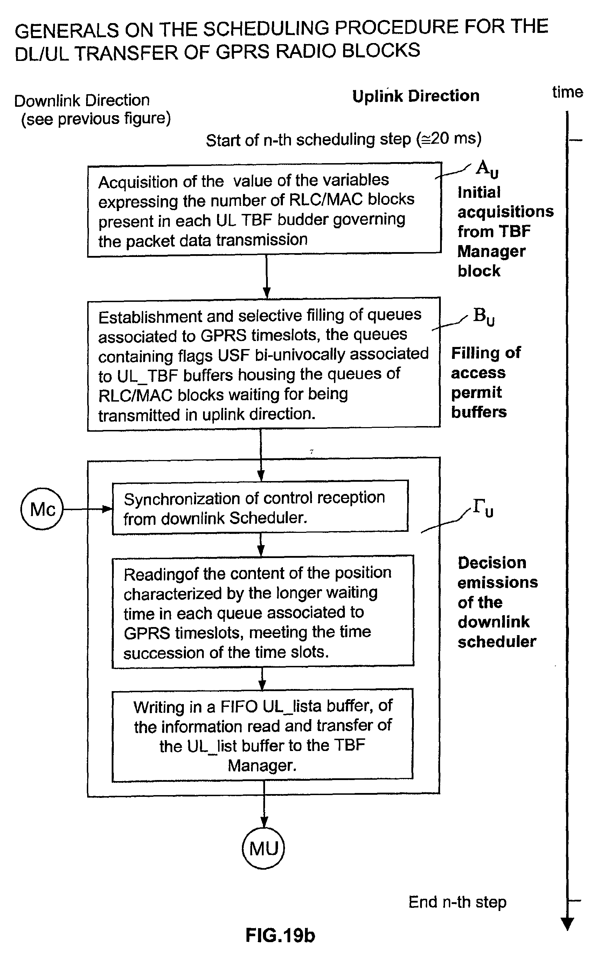

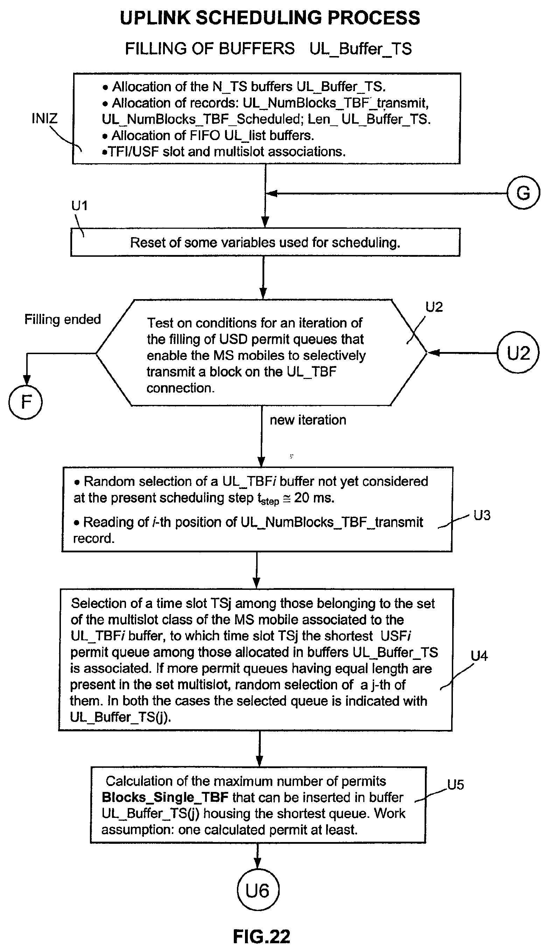

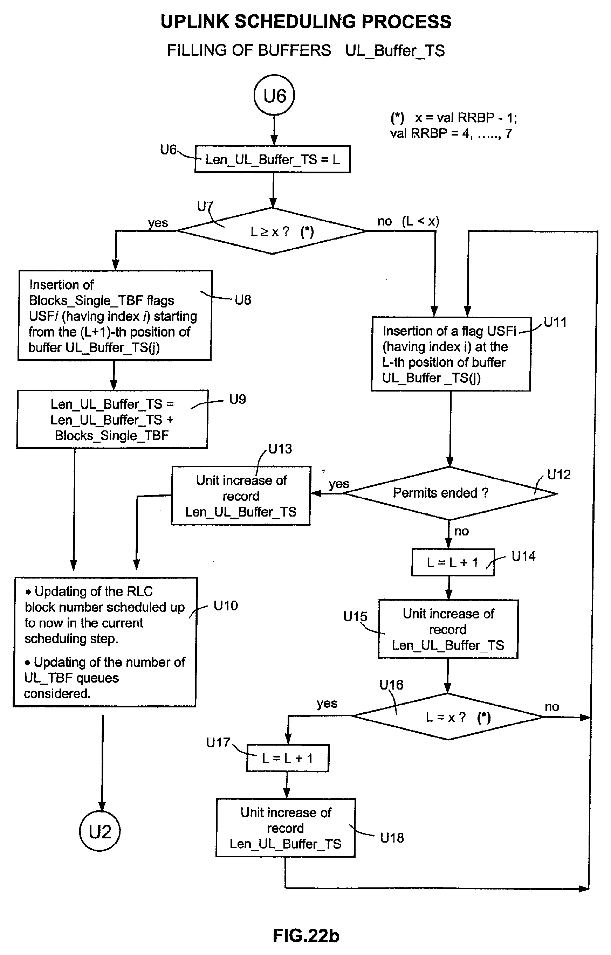

Each UL_Buffer_TS($j$) buffer of the third group contains the queues of the USF$i$ flags of one or more buffers UL_TBF$i$ scheduled for the uplink transmission of the next RLC blocks, following a filling strategy that shall be indicated in detail describing **Figure 22b.** With reference to **Figure 18** it can be noticed that a generic buffer UL_Buffer_TS includes an element x that shall always be kept empty to reserve an uplink position in case of polling, as it shall be clarified with reference to Figures from **21a** on. At the end of the filling phase the UL_Buffer_TS are buffers scanned and the information that entered first a UL_Buffer_TS($j$) buffer is written at the $j$-th position of the UL_lista record, as briefly described with reference to **Figure 19b,** and in more detail with reference to **Figure 23**.

As far as the remaining records are concerned, the $i$-th position of the UL_NumBlocks_TBF_Scheduled record contains the number of RLC blocks already scheduled for the UL_TBF$i$ buffer. The $j$-th position of the LEN_UL_Buffer_TS record contains the current number of elements of the UL_Buffer_TS($j$) buffer, that is to say: the USF$i$ flags valid for the uplink scheduling, a USF flag FREE coded to be used as permit to send a PRACH burst for the random access of the mobile to the data network, the convenience element at the position x EMPTY coded to avoid conflicts when an uplink RLC block is allocated through the polling mechanism, and possible elements NOT USED coded inserted during previous reservations of the position x for the polling.

With reference to **Figures 19a, 19b and 19c** an overview of the scheduling procedure scope of the invention is given. Figure 19a concerns downlink operations, while **Figure 19b** concerns uplink ones. **Figure 19c** concerns operations common to the two directions. The three figures show the time dimension of a scheduling step $t_{step}$ having 20 ms duration. The time of the scheduling step is given by the following expression:

$$t_{step} = \frac{52 \times t_{frame}}{12} = 20 \ ms \tag{5}$$

corresponding to the average transmission time of a RLC block on four TDMA frames. In **Figures 19a and 19b** the n-th-scheduling step is divided into three sequential phases denoted with $A_D$, $B_D$, $\Gamma_D$, for the downlink direction and $A_U$, $B_U$, $\Gamma_U$, for the uplink direction. $A_D$ and $A_U$ phases are phases for the acquisition of starting information necessary to the operations made during the current scheduling step. The $B_D$ and $B_U$ phases are phases for the filling of the queues of transmission permits belonging, the first one to the downlink scheduling and the second one to the uplink one. The $\Gamma_D$ and $\Gamma_U$ phases are phases which the two schedulers emit the decisions following the scheduling strategy. The two phases are not independent, as we shall see, their synchronisation and the possible transfer of a reservation command from the downlink Scheduler to the uplink Scheduler are necessary. The decisions of the two schedulers are stored in the two relevant records DL_lista and UL_lista and emitted, that is already delivered to the TBF MANAGER block at **points MD and MU** for their execution at the next scheduling step n+1. The storage of the scheduling decisions enables the TBF MANAGER block to operate in parallel with the Scheduler block, with an initial delay of 20 ms. In the common phase Δ, the TBF MANAGER block is piloted by the decisions of the two Schedulers taken during the previous scheduling step n-1 and stored in DL_lista($t_{step}$ - 1) and UL_lista($t_{step}$ - 1) records. During the present scheduling step this information is sequentially scanned at time-slot frequency, and the scheduled transmissions made, as it shall be better described when commenting Figures **24a and 24b.** The text contained in the boxes of **Figures 19a, 19b and 19c** describes the listed phases of the procedure, maintaining a given generality degree; the subsequent **Figures 20a ÷ 24b** shall be described with the right detail degree using the descriptive approach of the flow charts of computers. This is correct since the Scheduler block of **Figure 14** is included in a PCU (Packet Control Unit) card of the BSC station controller, governed by a microprocessor controlled by a program implementing the procedure of the invention.

With reference to **Figures 20a and 20b** it is now described the filling phase of the DL_Buffer_sgn_TS and DL_Buffer_TS buffers in the frame of the downlink scheduling activity. **Figure 20a** is referred to the DL_Buffer_sgn_TS buffers and **Figure 20b** to DL_Buffer_TS buffers. With reference to **Figure 20a,** the program starts from a starting phase INIZ in which the necessary resources in terms of buffers and record for the downlink scheduling are allocated in the memory of the microprocessor, these resources shall be specified describing **Figure 20b**. The program therefore crosses a **point A** and goes to step D1 where an index s is initialized, used to scan the iterations of a service cycle of the priority requests sent by the TBF MANAGER block for signalling and control requirements. The service cycle consists of steps D2 through D14. At the step D2 a reading is made of the FIFO MN_FIFO_Request buffer to acquire the requests of TBF MANAGER that has been waiting in queue for a longer time. At step D3 the program asks itself if the reading made indicates that the buffer is empty, in this case the program skips to a **point B** where a filling strategy of buffers DL_Buffer_TS is started. If the MN_FIFO_Request buffer is not empty, the program enters phase D4 for the decoding of the information fields read. The decoding can supply one of the following information: **d/TFI$i$, d/TFI$i$ & RRBP, u/TFI$i$, u/TFI$i$ & RRBP.** The four possibilities originate a bifurcation of the flow-chart in two separate branches. The first branch consists of steps D5, D6, D7, and D8 and corresponds to the d/TFI$i$ or d/TFI$i$ & RRBP conditions that can be read in block D5. The second branch consists of steps D11, D12, D13, and D14 and corresponds to the u/TFI$i$ or u/TFI$i$ & RRBP conditions that can be in block D11. The two branches join together at step D9. Travelling the first branch, the program encounters the step D6, where it selects a time-slot having j index to insert, at step D7, in the first free position of the DL_Buffer_sgn_TS($j$) buffer associated to the time-slot having index $j$, the information field just decoded d/TFI$i$, or d/TFI$i$ & RRBP, to be used as transmission permit of a control block $i$. The criterion adopted is to select among all the buffers DL_Buffer_sgn_TS associated to the time-slots included in the multi-slot class of the mobile $i$, the one containing the shortest TFI$i$ permit queue, considering the fact that at the length of a permit queue, all the connections sharing the same time-slot that allocates the queue can contribute. The selected DL_Buffer_sgn_TS($j$) buffer restricts the selection of the time-slot. At step D8 the indicated records are increased. A test is made on the s index value at step D9 to see if the MN_FIFO_Requests queue has been emptied or if the scheduling step is over. If one of the two conditions occur, the program goes to **point B**, otherwise it performs a second iteration of the cycle s. Returning to the decoding step D4, if the decoding is referred to the second branch D11 ÷ D14, the program performs legible actions in the relevant blocks.

The crossing of **point B** for the execution of step D15 occurs when the scheduler has served all the pending priority requests. From step D16 to step D20 a filling iteration is made of a buffer DL_Buffer_TS($j$) selected according to the strategy shown. The final step D20 sends back to step D16 for the inspection of the conditions for a new iteration; is filling is ended the program crosses a **point C** introducing the management of the downlink scheduler decisions. Filling operations made at steps D16 ÷ D20 require the following parameters; some of them take the name of the host record:

PARAMETERS FOR THE DL_TBF QUEUES

**DL_NumBlocks_TBF_transmit($i$):** introduced describing **Figure 15,** it is the number of RLC blocks that the queue DL_TBF($i$) shall transmit. The $i$ index, with $1 \leq i \leq n$ selects a DL_TBF($i$) queue among the n currently allocated.
**DL_NumBlocks_TBF_Scheduled($i$):** introduced describing **Figure 16,** it is the number of RLC blocks already scheduled for the DL_TBF($i$).
**Num_Scheduled_TBF:** it is the number of queues DL_TBF for which a scheduling iteration has already been made at the current scheduling step.
**N_TBF:** it is the total number of queues DL_TBF allocated to the current scheduling step.

PARAMETERS PER I BUFFERS DL_Buffer_TS

**N_TS:** it is the number of time-slots currently used for the GPRS; are selected from the value assumed by an index $j$.
**Len_DL_Buffer_TS($j$):** introduced describing **Figure 16,** it is the number of RLC blocks currently scheduled within buffer DL_Buffer_TS($j$).
**Max_Len_DL_Buffer_TS:** is the maximum length common to each buffer DL_Buffer_TS($j$).
**NumBlocks_TBF_to_TS:** it is the number of RLC blocks scheduled in the current scheduling step up to the previous updating instant of the permit number.
**Max_NumBlocksTBF_to_TS:** it is the maximum number of RLC blocks that can be allocated at each scheduling step by the queues DL_TBF to buffers DL_Buffer_TS. **It** corresponds also to the maximum number of permits that can be scheduled in a scheduling step $t_{step}$ having 20 ms duration. This number is let equal at least to the value N_TS+1 in order to avoid to empty beforehand the buffers of transmission permits. Values of index s > N_TS+1 can be considered, compatibly with the maximum length foreseen for the buffers of transmission permits. It is assumed a default value = N_TS+1.
**Blocks_Single_TBF:** it is the number of transmission permits for the DL_TBF($i$) queue that can be completely inserted in the corresponding number of free positions of DL_Buffer_TS($j$) buffer associated to the time-slot $j$ selected to serve the transmission queue DL_TBF($i$).

This said, the following variables are reset at step D15: NumBlock_TBF_to_TS and Num_Scheduled_TBF. In the next step D16 the program checks the simultaneous meeting of three conditions **a), b), c)** for the filling iteration of buffers DL_Buffer_TS. The step D16 is the following:

**a)** (DL_NumBlocks_TBF_transmit($i$) > DL_NumBlocks_TBF_Scheduled($i$) for any value of index $i$) **AND**
**b)** (NumBlocks_TBF_to_TS < Max_ NumBlocksTBF_to_TS) **AND**
**c)** (Num_Scheduled_TBF < N_TBF).

Concerning the condition **a),** any value of index $i$ it can certainly be applied without restrictions only at the starting of the scheduling step, for the subsequent filling iterations the term "any" is limited to DL_TBF($i$) queues that have still to be randomly selected. If at step D16 the answer is "yes" the program performs the step D17 for the random selection with even probability distribution of a queue DL_TBF($i$) not already selected beforehand during the current scheduling step. An applying rule is the following: a DL_TBF($i$) queue can be selected only once in a scheduling step. Always remaining in step D17, matching the DL_TBF($j$) queue selected the program reads the information present at the $i$-th position of record DL_NumBlocks_TBF_transmit, whose meaning has already been described matching the homonym parameter. Step D18 is then performed for the selection of the time-slot $j$ and of the relevant buffer DL_Buffer_TS($j$) according to the methods that can be read in the figure. At the next step D19 the program calculates the **Blocks_Single_TBF** parameter for the DL_TBF($i$) queue selected at the previous step, selecting the minimum value given by the following expressions:

**1)** DL_NumBlocks_TBF_transmit($i$) - DL_NumBlocks_TBF_Scheduled($i$).
**2)** Max_NumBlocksTBF_to_TS - NumBlocks_TBF_to_TS.
**3)** Max_Len_DL_Buffer_TS - Len_DL_Buffer_TS($j$).

The expression 1) gives the number of RLC blocks that the DL_TBF($i$) queue has to transmit and not yet scheduled. The expression 2) gives the number of RLC blocks that can still be scheduled for the time-slot TS($j$). The expression 3) gives the number of RLC blocks that can still be scheduled for the transmission queue DL_TBF($i$) at the current scheduling step. The values given by expressions 1), 2), and 3) represent a same number of limiting factors for the maximum number of permits that can be inserted in the selected DL_Buffer_TS($j$) buffer. Matching the maximum restriction we have the Blocks_Single_TBF parameter used for the updating made at the next step D20.
The step D20 includes the following five updates:

1. The identifier TFI($i$) is written in the Blocks_Single_TBF first free positions of the selected buffer DL_Buffer_TS($j$).
2. DL_NumBlocks_TBF_Scheduled($i$) = DL_NumBlocks_TBF_Scheduled($i$) + Blocks_Single_TBF.
3. NumBlocks_TBF_to_TS = NumBlocks_TBF_to_TS + Blocks_Single_TBF.
4. Len_DL_Buffer_TS($j$) = Len_DL_Buffer_TS($j$) + Blocks_Single_TBF.
5. Num_Scheduled_TBF = Num_Scheduled_TBF +1.

The program returns then to the test phase D16 and, if the tested conditions indicate that the filling of DL_Buffer_TS($j$) buffers is ended, the program crosses **point C** and goes to the phase of decision emission of the downlink Scheduler. It is demonstrated that the operation mode indicated at steps D15 ÷ D20 of **Figure 20b** enables to obtain RSFi values of expression (2). This means that transmission permits are assigned to the mobiles in mean proportion to the number of time-slots allocated to each transmission queue DL_TBF($i$), that is to say, in average proportional to the peak transmission speed negotiated by each mobile with the network.
The target of the decision emission phase is to orderly transfer a memory word, which has been waiting for a longer time in queue, from each DL_Buffer_sgn_TS or DL_Buffer_TS buffer to the DL_lista record, for its transfer to the TBF MANAGER block. In the single k-th position of the DL_lista record the information coming from one of the two types of buffer only shall be included, giving priority to the buffer DL_Buffer_sgn_TS. With the above, at step D21 an index k that scans the iterations of two hidden writing cycles of the DL_lista record is initialized, of which, the more external cycle takes the information from the buffers DL_Buffer_TS and the more internal one from buffers DL_Buffer_sgn_TS. The program goes to the next step D22 crossing a **point E** representing the arrival point of an iteration of the more external cycle. At step D22 a test is made to determine if the k-th buffer DL_Buffer_sgn_TS is empty or still has control information to transfer. Whenever the above mentioned buffer results empty, the program crosses a **point D** that sends back to the starting of an iteration of the more external cycle. Should the subject buffer k-th be not empty the next steps D23 and D24 complete the transfer to the corresponding position of the record DL_lista of the information fields (INF$i$) read by buffer DL_Buffer_sgn_TS, that are eliminated by the buffer. An analysis of information fields INF$i$ follows. At the next step D25 the program makes a test to check the presence of a valid value of the RRBP field (Relative Reserved Block Period). In the affirmative, it means that during the previous filing phase the branch D5 ÷ D8 foreseen for polling had been crossed, to this purpose the step D26 is made, in which the downlink Scheduler must necessarily interact with the uplink Scheduler through the transfer of a command. The scope of the command is to induce the downlink Scheduler to write in the k-th buffer **UL_Buffer_TS** a NOT USED code at the default position: x = value(RRBP) - 1 indicated in **Figure 18.** For what said in the introduction on the mechanism of USF flags for the control if the uplink transmission, and on the different mechanism of the RRBP field, it may be understood how the arrangement in D26 avoids interference between the two reservation mechanisms. In fact, leaving the position x free from USF it is prevented that any scheduled mobile can transmit a RLC block in the time slot in which the position x is placed, superimposing to the transmission made by the mobile uplink engaged by the mechanism RRBP. The interaction between the two schedulers involves the need for their synchronisation, which can be solved in different ways. The non-limiting mode presently used foresees the storage of the command, in the form of a VALID*i* code, in one k-th position of the MEM_command_DL_to_UL record of **Figure 16a.** The processing of this command shall be described when dealing with the uplink Scheduler. At the next step D27, directly reached for negative answer also in D25, a second test on the information INF*i* is made to check the presence of a downlink /TFI*i* identifier rather than an uplink/TFI*i* one. The discrimination between these two identifiers, used by the TBF MANAGER block to send a corresponding RLC/MAC control block, is used to introduce the next decrease step D28 only in the case of downlink scheduling. The internal iteration is then completed performing steps D29, D30, and D3. If the test at step D31 says that the writing of the DL_lista record has been completed, the step D32 is made, which involves the execution of the three operations indicated in the figure. The first operation is used to relieve the DL_lista record discharging its content in the DL_lista($t_{step}$ - 1) record, in order to be able to receive the transfers at the next scheduling step and enable the TBF MANAGER block to operate in an independent way. The second operation, consisting in the enabling of a End_command_DL_to_UL flag, is used to synchronise the operation of the downlink scheduler. The third operation is the waiting for the end of the current downlink scheduling step, then the program returns to **point A** of **Figure 20a** where a new downlink scheduling step comes in.

Reverting to the test of step D22, if the k-th DL_Buffer_sgn_TS buffer results empty, the program proceeds to perform steps D33 and D34 of an external iteration for the transfer to the k-th position of the DL_lista record of a word INF*i* read in the k-th buffer DL_Buffer_TS. In this case the word INF*i* is made of one single identifier downlink/ TFI*i* used for downlink scheduling. The external iteration is completed with the execution of decrease steps D35 and D36 and with steps D37 and D38. If the test at step D31 says that the writing of the DL_lista record has been completed, step D32 equal to step D32 is made; this means that steps D32 and D39 are alternative, the execution of either depends on where the decision emission stage ends.

It is now described the uplink scheduling process of **Figures 22a, 22b and 23**. With reference to **Figure 22a**, the program starts from an initial phase INIZ in which the necessary resources in terms of buffers and records for the uplink scheduling are allocated in the microprocessor memory, and read the association information TFI/USF on the time-slots used in the uplink scheduling. The uplink process has the same starting instant of the current downlink scheduling step. The steps preceding the filling of buffers UL_Buffer_TS are completely similar to the corresponding ones of the downlink process, therefore the description of an iteration is simplified. In practice, the description of steps: U1, U2, U3, U4, U5 can be referred to that of steps D15, D16, D17, D18, D19 of **Figure 20b**, with the measure to replace the prefix DL by UL when indicating buffers, records, and single parameters used in the calculations. Also the conclusions concerning the RSF*i* parameter are the same.

With reference to **Figure 22b,** the next steps U6 through U18 represent a filling cycle of the UL_Buffer_TS(*j*) buffer (Figure 18) with a number **Blocks_Single_TBF** of USF*i* flags calculated at step U5, considering also that the parameter Max_Len_UL_Buffer_TS is the one resulting net of position x. The UL_Buffer_TS(*j*) buffer is the one selected with reference to steps U1 ÷ U5.

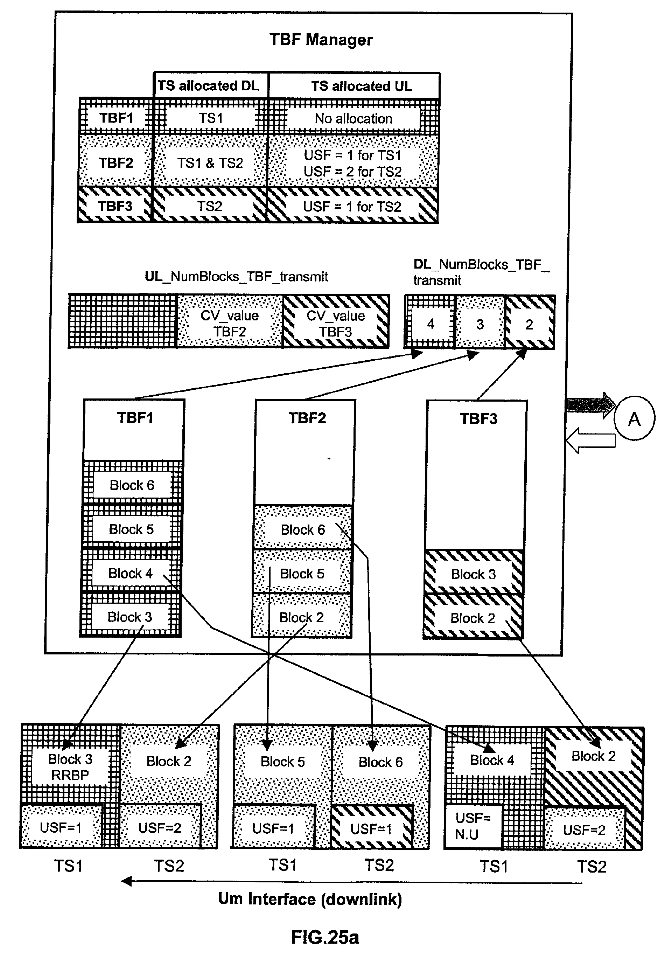

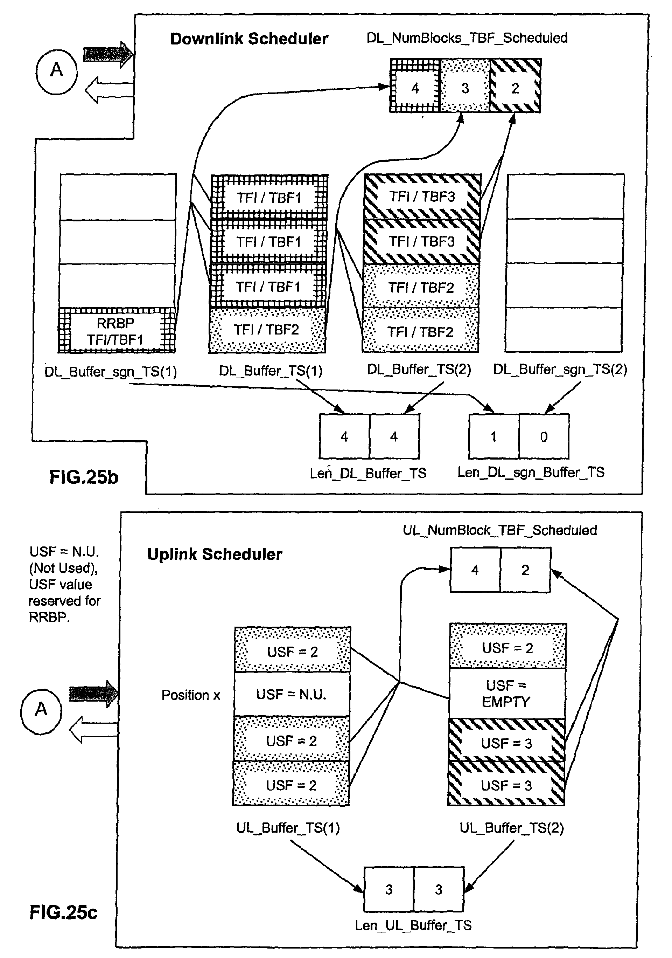

For the determination of the USF*i* value at step U8 it must be considered that at the end of step U5 the scheduler has already randomly selected the UL_TBF*i* transmission queue and has also selected the time-slot TS*j* and the relevant buffer UL_Buffer_TS (*j*) in which to enter the number of permits Blocks_Single_TBF. Contrarily to the downlink scheduling process, where the scheduler only enters the calculated number of identifiers TFI in the permit buffer, without any need for transmitting via radio the permits to the mobiles, on the contrary, in the case of the uplink scheduling it is necessary to transmit via radio the permits to the mobiles, and it is not possible to use the TFI identifiers of RLC blocks transmitted in downlink direction as permits (because already engaged for the identification of the DL_TBF*i* transmitting buffer). The GPRS strategy is to use a second typology of identifiers, precisely the USF, placing them aside the TFI as uplink transmission permits. As already said, a USF permit is inserted in a RLC block extracted from a DL_TBF queue and therefore downlink transmitted on the on-air interface to select the queue UL_TBF it shall transmit in uplink the next RLC block. In the assignment of a USF*i* permit it is necessary to avoid collisions among the queues UL_TBF*i* sharing the time-slot *j*. The selection is bound to the criteria of the allocation table TFI/USF of step INIZ, a concrete example of which can be seen at top of **Figure 25a.** The criteria indicated in the table enable to determine the correct USF*i* value associated to the transmission queue UL_TBF*i* matching the time-slot *j*.

The filling method of the UL_Buffer_TS(*j*) buffer is such to leave the default position x always empty, and it shall always be at disposal of the decisions of the downlink Scheduler concerning the possible entering of the USF = NOT USED code. The program performs a test at step U7 to consider if the filling degree of the UL_Buffer_TS($j$) buffer is such to exceed the position x, or possibly match, because in this case it can write in sequence in U8 all the foreseen USF flags, without interruptions. In the next step U9 a cumulative updating of the Len_UL_Buffer_TS record is made, and then the missing updates made in U10. On the contrary, if the test made at step U7 shows a filling degree of the UL_Buffer_TS($j$) buffer lower than position x, it is necessary to follow the remaining steps U11 ÷ U18, where at each writing in the UL_Buffer_TS($j$) buffer, the buffer length is firstly unitary increased, and then the new length is tested to check the occurrence of position x, in order to skip it. If in test of step U12 it results that all the permits have been written, the program performs the last length increase and goes to the final updating step U10. Afterwards, the program returns to step U2 to consider the possibility to perform another filling iteration of a buffer UL_Buffer_TS, not already scheduled at the current step. The same rule used in the downlink scheduling applies, according to which a buffer cannot be scheduled more than once in the same scheduling step. If in U2 it results that the filling is ended, the program crosses **point F** and sets to consider the decision emission process of the uplink scheduler shown in **Figure 23**.

With reference to **Figure 23,** it can be noticed that during the initial step U19 a query cycle of the End_command_DL_to_UL flag is introduced, to see if it becomes active. The synchronisation example given is a non-limiting solution of the synchronisation problem between two processes. The synchronisation methods available in the known technique are multiple. It is evident that the emissions of decisions shall come after the acquisition of the elements on which decisions have to be made. The strategy here adopted foresees that the commands of the downlink Scheduler are completely put at disposal at the end of the decision emission process by the mentioned scheduler. To this purpose, the Scheduler downlink at step D26 of Figure 21a stores a command in the MEM_command_DL_to_UL record, and enables the End_command_DL_to_UL flag during the final steps D32 or D39 to enable the reading of the above mentioned record. Therefore, the strategy used imposes to the uplink Scheduler to wait for the completion of the commands it shall acquire, before emitting its decisions; however, this does not prevent that the uplink Scheduler can simultaneously still be engaged in the filling of its buffers. A different strategy based on the interrupt signals could avoid the delay.

This let, in the next step U20 is initialised an index k used to scan the iterations of the emission process, and in the next step U21 the position k-th of record MEM_command_DL_to_UL is read. The next steps U22, U23, and U24 are in the reading order of the content of field USF$i$ from the position waiting in queue in each buffer UL_Buffer_TS(k) for a longer time, and of writing at the k-th position of record UL_lista of the information read, which is eliminated by the relevant buffer. The separate cancellation step U24 clearly highlights that the UL_Buffer_TS(k) buffer does behave neither as a FIFO nor as a shifting record, where in both the cases the reading causes an automatic shifting of memory a location of the whole content stored and therefore the cancellation of the information read. In the cases considered at steps U26 and U29 the shifting of the UL_Buffer_TS(k) buffer content is not even, because it shall preserve the non-occupation of the default position x and therefore, for what said, the cancellation of the information read is not automatic. At step U25 the program performs a test on the command read at step U21 to determine one of two different shifting methods of the UL_Buffer_TS(k) buffer content. More in particular, if it results from the test at step U25 that the code previously read in record MEM_command_DL_to_UL corresponds to a RRBP = VALID$i$ code, the step U26 is made, while in the contrary instance, that is when an EMPTY code is read, a step U29 is made. In the assumption of execution of step U26, the first operation consists in the insertion of a NOT USED code at the x position of the k-th UL_Buffer_TS buffer, for the reasons mentioned several times. Then, the indicated operations are performed in order, and the result is to shift the element x = NOT USED by one position in outgoing direction, just introduced, together with all the elements preceding in time the position x. The EMPTY code re-introduced at the x position makes the element x newly available. With the methods indicated at step U26 the occupation degree of buffer UL_Buffer_TS(k) remains unchanged, because the loss of an element at the previous step U24 is compensated by the insertion of the coded element NOT USED in the flow of shifting elements, therefore it is not necessary to decrease the content of the k-th position of record Len_UL_Buffer_TS. At step U27 The content of position $i$-th of the record UL_NumBlocks_TBF_Scheduled suffers a unit decrease. The fact that at step U26 the subject record has suffered a unit increase at the $i$-th position does not mean that two equal and contrary operations and therefore superfluous are made at steps U26 and U27, because index $i$ of step U26 is always different from index $i$ at step U27.

In the assumption of execution of step U30 means that the code NOT USED is not inserted in position x, therefore a new element is not created in the buffer UL_Buffer_TS(k) following the shifting that maintains this position empty, in this case the loss of an element at the previous step U24 is an actual one and it is necessary to decrease by one unit the content of the k-th position of Len_ Buffer_TS and UL_NumBlocks_TBF_Scheduled records.

On completion of the writing cycle of record UL_lista, the program performs the step U32 that ends the decision emission process of the downlink Scheduler. In this processing step the flag End_command_DL_to_UL is disabled, making it newly available for the downlink Scheduler; and after completion of the current scheduling step the program returns to **point G of Figure 22a** for the starting of a new scheduling step.

With reference to **Figures 24a and 24b** it is finally considered the operation of the TBF MANAGER block of **Figures 14 and 15.**

The first box INIZ1 of **Figure 24a** includes all the information transferred by the network to the TBF MANAGER block, which enable this block to be able in turn to instruct the two Schedulers concerning the processing they shall perform in the next scheduling step. Among these data appears also that for the re-transmission of wrongly received RLC blocks. When the TBF MANAGER is informed that a RLC block transmitted on the TBF connection *i* has not been correctly received, it reinserts the block in the original queue of RLC blocks to transmit for that TBF connection *i*, and unitary increases the queue length:

DL_NumBlocks_TBF_transmit(*i*) = DL_NumBlocks_TBF_transmit(*i*) + 1 for a downlink TBF.
UL_NumBlocks_TBF_transmit(*i*) = UL_NumBlocks_TBF_transmit(*i*) + 1 for a uplink TBF.

In the second INIZ2 box, all the information passed from the TBF MANAGER block to the two Schedulers is highlighted. The information indicated in INIZ1 and INIZ2 boxes can be read in **Figure 14**. The program, on completion of the preparation phase, initializes at step M1 an index k used for the scanning of the two records DL_lista($t_{step}$ - 1) and UL_lista($t_{step}$ - 1) and relevant acquisition of scheduling information stored by the schedulers. The scanning of the two records can be simultaneously made observing the writing sequence, which reflects the time order of time-slots GPRS. The two records store the result of the scheduling for the control of precedence in the transmissions of RLC/ MAC blocks on the on air interface. The TBF MANAGER block, interprets the information received by the schedulers, it too visible in **Figure 14**, and makes it effective towards the concerned base station (BTS), and towards the MS mobile stations connected to the same. The program decodes at step M3 the information fields read at the previous step. It can also happen that an information field is empty, this occurrence means in downlink that the k-th buffers DL_Buffer_TS and DL_Buffer_sgn_TS are empty, and in uplink that the k-th buffer UL_Buffer_TS is empty. The uplink case does not require particular measures, is treated without entering any USF in the RLC block to transmit, while in the downlink case the program transmits a Dummy control block, possibly with USF inserted, and proceeds to the next iteration.

At each iteration of the index k, corresponding to a relevant time-slot GPRS, the information read in the k-th position of the UL_lista($t_{step}$ - 1) record concerns the value of the **USF*i*** field only, which can result: effective, not used, or empty, respectively. Since the decoding of USF*i*, comes in only after that the decoding of the corresponding information read in the k-th position of the record DL_lista($t_{step}$ - 1) has been served, the USF*i* value, is temporarily stored at step M4. With an alternative method the record UL_lista($t_{step}$ - 1) can be read, and USF*i* decoded, only on the moment of the actual utilization.

The information coming from the decoding of the reading made matching the k-th position of record DL_lista ($t_{step}$ - 1) is more articulated. The following cases are foreseen:

- **u/TFI*i*:** identifier TFI (Temporary Flow Identity) of a buffer TBF*i* uplink (Temporary Block Flow). It corresponds to a situation considered in the right side of **Figure 20a** at steps D11 ÷ D14, and concerns the scheduling of control blocks. The case considered is the one in which the network transmits to the mobile a downlink control block including a message, for instance, a PACKET UPLINK ACK/NACK message for a TBF*i* uplink buffer. It is a situation in which a concurrent downlink buffer TBF*i* has not been allocated to the mobile *i*.
- **u/TFI*i* & RRBP:** this case can be compared to the previous one with the addition of the processing of the RRBP field received by the scheduler downlink. The addition of the RRBP field is made by the network to order the mobile to acknowledge in turn a transmitted downlink message, for instance, the PACKET UPLINK ACK/NACK message mentioned before. The acknowledgement will occur in the block indicated by RRBP (corresponding to default position x in Figure 18). The instance coincides it too to the situation considered in the right side of Figure 20a at steps D11 ÷ D14, and concerns the scheduling of the control blocks. The treatment of decoding u/TFI & RRBP is not indicated, for shortness, in Figures **24a and 24b.**
- **d/TFI*i* & RRBP:** identifier TFI of a buffer TBF*i* downlink, and a valid value of the RRBP field. It corresponds to a situation considered in the left side of **Figure 20a** at steps D5 ÷ D8, and concerns the scheduling of control blocks. The case considered is the one in which the network transmits a downlink control block to the mobile, containing for instance a PACKET DOWNLINK ACK/NACK message, including an uplink acknowledgement request to be made through the polling mechanism.
- **d/TFI*i*:** identifier TFI of a downlink buffer TBF*i*, lacking a valid value of the RRBP field. It corresponds to two different situations. A first situation is considered in the left side of **Figure 20a** at steps D5 ÷ D8, and concerns the scheduling of control blocks. A second situation is the one considered in **Figure 20b** for the scheduling of RLC blocks containing Data and are placed in the non-priority TBF queues.

Steps M5, M9, and M15 describe the actions undertaken by the TBF MANAGER block matching the indicated information fields. Concerning the missing step that can be referred to the **u/TFI*i* & RRBP** decoding, it can be referred to step M9 replacing the term downlink by uplink. The above-mentioned actions consist in a same number of selections that the TBF MANAGER block performs in the queues allocated to the same **(Figure 16).** For all the connections except for those denoted **d/TFI,** it is selected the block characterized by the longer waiting time in its own queue, while for the connections denoted **d/TFI,** the selection shall meet a transmission priority among the different typologies of blocks that can transit on these connections. Of course, the ways indicated by steps M5, M9, and M15 are alternative among them, once the program takes a path, it runs it up to step M8 included. On the way originated at step M5, missing the downlink TBF buffer, it is not possible to implement the USF mechanism. Consequently, the sole possible action is the uplink transmission of the selected control block. The ways originated at step M9 or M15 foresee the decoding of the **USF$i$** field stored at step M4 to act as indicated in the figure.

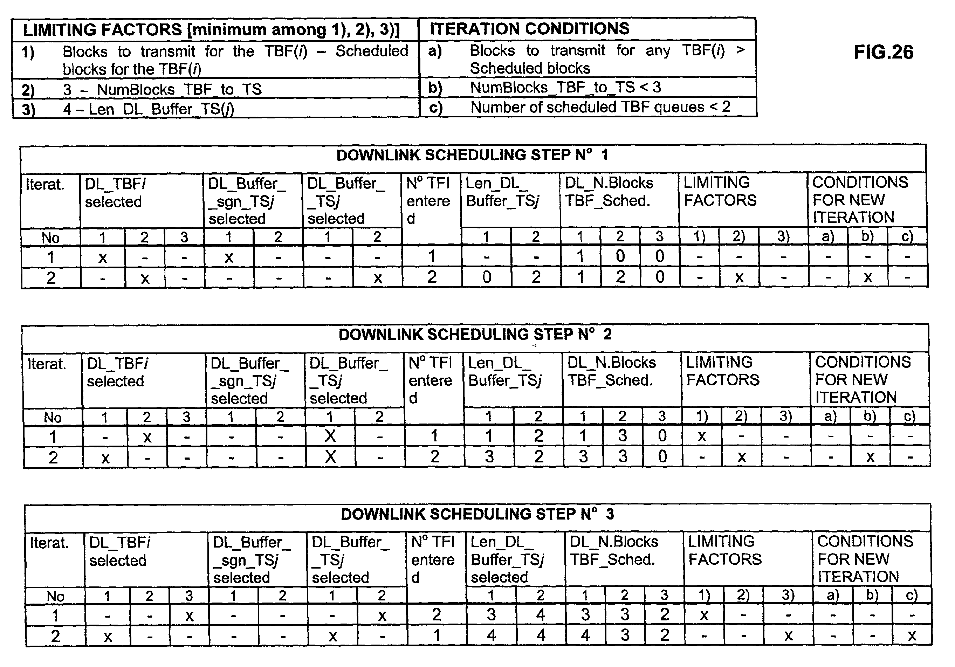

With reference to **Figures 25a, 25b, 25c, and 26** we give a practical implementation example of the scheduling procedure scope of the invention. **Figure 25a** shows the filling status of buffers DL_TBF and of the relevant records of the TBF MANAGER. In the upper part there is a table containing the information for the allocation of the time-slots and USF flags at TBF connections. The example is intentionally simplified to three TBF$i$ only and to two time-slots only. In the lower part we can see the sequence of the blocks transmitted on the on-air interface in downlink direction, obtained on the basis of the scheduling method of **Figures 25b and 25c**. For representation briefness, three block periods only are considered. For each block period, the two time-slots GPRS TS1 and TS2 are indicated. For each time-slot a RLC block is transmitted (interleaved on four basic frames GSM). As it can be noticed, the USF permits scheduled for the transmission in uplink direction are directly transmitted to the MS mobiles together with the relevant RLC blocks, contrarily to what happens for transmission in downlink direction. The different filling degree of DL_TBF1, 2, and 3 buffers appears from the values stored in the three corresponding positions of the DL_NumBlocks_TBF_transmit record. The UL_NumBlocks_TBF_transmit record contains the dual information for the UL_TBF buffers. The information reported in these records is transferred to the relevant schedulers, together with a polling request concerning the TBF1. In the different TBF$i$ buffers, blocks appear in sequence order, but even they were not due to one or more blocks to re-transmit, the fact would not represent a limitation to the present invention because as already highlighted, the transmission of a sequence correctly ordered concerns the operations of the TBF MANAGER downstream the scheduling procedure. **Figures 25b and 25c** show the filling condition of the buffers of transmission permits, respectively: DL_Buffer_sgn_TS($i$) for the control and signalling blocks, DL_Buffer_TS($i$) for downlink scheduling, and UL_Buffer_TS($i$) for uplink scheduling. The scheduling is a dynamic process and as such it involves a given difficulty of figurative representation. A correct representation would require the repetition of the three figures 25a, 25b, and 25c at each new scheduling step, deleting from the TBF$i$ buffers of the transmitted blocks and inserting the new blocks to transmit. Adopting the simplification hypothesis according to which no new block enters the queues TBF$i$, and reverting to the tables of **Figure 26** it is possible to follow the dynamic of the scheduling process while maintaining the simplification to three figures only. This said, under the additional hypothesis that RLC blocks to transmit have been maintained within the relevant buffers TBF$i$, the status of buffers and records in figures 25a, 25b, and 25c is the one resulting after some scheduling steps. This second hypothesis is consistent with the first one, since if no new block enters buffers TBF$i$, then it is always possible to follow step by step the evolution of the scheduling process on the basis of the initial state of the above mentioned buffers.

With reference to **Figure 26** it is now examined step by step the downlink scheduling, up to reaching the filling condition of the buffers and of the records, visible in **Figure 25b**. On top of the three tables are shown the three factors concurring in determining the maximum number of permits per TBF$i$ queue that can be assigned in the current scheduling step, and the three conditions that, whenever simultaneously occurred, enable to assign transmission permits to another TBF$i$ queue in the current scheduling step. The first table concerns the first scheduling step, where the insertion of a TFI/TBF1 identifier and of the RRBP value ,at the first position at bottom of the buffer DL_Buffer_sgn_TS(1), is binding. Since a valid value of RRBP is present, it is also necessary to reserve an empty position x (for instance the third one) in the corresponding buffer UL_Buffer_sgn_TS(1). At the second iteration, the TBF2 queue is randomly selected for the assignment of the permits. The two permit buffers DL_Buffer_TS(1) and DL_Buffer_TS(2) are both empty, then, the second one is randomly selected to write two identifiers TFI/TBF2, in accordance with the second limiting factor. Since the number of blocks scheduled up to now is 3, the condition b) is no longer trues and ends the first scheduling step. At the first iteration of the second scheduling step the TBF2 queue is randomly selected. Dei due time-slots assigned to TBF2, the one whose permit buffer results less loaded is the DL_Buffer_TS(1) selected to insert the last identifier TFI/TBF2, in accordance with the first limiting factor. At the second iteration the TBF1 queue is randomly selected for permit assignment. The TBF1 queue avails of the sole time-slot TS1, therefore the choice of the buffer DL_Buffer_TS(1) is binding. It is possible to introduce two identifiers TFI/TBF1 in this buffer, in accordance with the second limiting factor. Since the number of blocks scheduled up to now is 3, the condition b) is no longer true and ends the second scheduling step. At the first iteration of the third scheduling step the TBF1 queue is forcedly selected, since it is the sole still having blocks to transmit. Also the selection of the DL_Buffer_TS(1) buffer is binding, because it is the sole one still having a free position. In the DL_Buffer_TS(1) buffer it is possible to write one TFI/TBF1 identifier only, afterwards this buffer results full. The condition c) sanctioning the end of the third scheduling step is actuated. Additional scheduling steps shall be possible as the buffers of permits are emptied.

Now, it is automatic to calculate the values of the RSF parameter (Relative Scheduling Frequency) for the identifiers TFI/TBF1, TFI/TBF2, and TFI/TBF3 on the basis of the state of buffers DL_Buffer_TS(1) and DL_Buffer_TS (2) of **Figure 25b,** to compare then these values with similar values that would result from the Round Robin method applied to the allocation table of **Figure 25a**. Finally, the following results for the method of the invention: RSF/TBF1 = 0,375; RSF/TBF2 = 0,375; RSF/TBF1 = 0,250. While for the Round Robin method it would result: RSF/TBF1 = 0,25; RSF/TBF2 = 0,50; RSF/TBF1 = 0,25. The example, though simple, confirms what already said in the introduction on the behaviour of the proposed scheduler; in particular it can be noticed how in terms of RSF the transmission queue TBF2, with more allocated resources, cedes a part of resources utilization in favour of the TBF1 queue.

With reference to **Figure 25c** of the uplink Scheduler, it is possible by analogy with the subjects developed on the downlink Scheduler of **Figure 25b**, to extend the tabular representation of the scheduling steps to the uplink Scheduler, up to reaching of the filling state of buffers and records visible in the figure.

We shall now describe another embodiment of the procedure that introduces in the (3) the weighting operations that lead it to form (3'). The embodiment is implemented by the network entity assigning the resources to TBF connections. The above-mentioned entity tries to assign a number of time-slots TS to each TBF, depending on the requested peak speed, rather than simply on the negotiated one. According to the variant, the number of time-slots TSi assigned to a TBFi should be equal to the number of TS requested Tsreq, as indicated below:

$$TSreq_i = \frac{PT_i}{HCS} \tag{6}$$

where:

$TS_i$ = Number of TS assigned by the network to the mobile,
$TSreq_i$ = Number of TS requested by the mobile to the network,
$PT_i$ is the peak speed requested by the $TBF_i$,

In the (6) HCS is the highest coding scheme available on the carrier. If TSi is equal to $TSreq_i$ for each TBFi then the Scheduler shall subdivide the resources in proportion to the number of TS assigned to each TBF, and the satisfaction requirement of the peak speed is however satisfied. Should the resources allocation procedure does not succeed in allocating the number of TS requested to a given TBFi, that is TSi is lower than $Tsreq_i$, the Scheduler still tries to meet the proportionality requirement at peak speed, giving higher priority to the TBFi. The throughput of the TBFi depends on the coding scheme CS (Coding Scheme) adopted and on re-transmissions (BLER= BLock Erause Rate) due to the radio conditions:

$$THROUGHPUT_i = (1 - BLER_i) \times RSF_i \times TS_{tot} \times CS\_THROUGHPUT \tag{7}$$

where:

CS_THROUGHPUT =   8 kbit/s for CS-1
12 kbit/s for CS-2
14.4 kbit/s for CS-3
20 kbit/s for CS-4.

In the (7) TStot is the number of TS that have allocated one TBF at least for the same carrier. To obtain the (3'), the scheduling algorithm when it has to fill the buffer DL_Buffer_TS and UL_Buffer_TS with the permits randomly selects a TBFi, no more with even probability, but with weighted probability given by:

$$P\_TBF_i = \frac{W_i}{\sum_k W_k} \tag{8}$$

where:

$$W_x = \frac{TSreq_x}{TS_x} \qquad (9)$$

The weights Wi are input parameters of the scheduler algorithm and are supplied by the entity assigning the TS to the TBFi. They are calculated on the moment of the establishment /reconfiguration of a TBF.

From the operational point of view, the problem to be faced by the Scheduler is that to transform a process to randomly extract with even probability a TBFi, in a process to randomly extract with weighted probability the TBFi. Assume to have to select a TBF among n TBF available. Let $P_i$ with i=1...n, the probability to select the $TBF_i$ (con i=1... n). Let the $P_i$ expressed in percent points, therefore

$$\sum_{i=1}^{n} P_i = 100\%.$$

Assume to have a random process extracting with even probability a number *x* 1 to 100. The probability to extract a number *x* is therefore 1/100. After having extracted *x*, the *i* value is evaluated such that the following condition applies:

$$\sum_{x=1}^{(i-1)} P_x < x \le \sum_{x=1}^{i} P_x \quad where \ \ i = 1...n, P_0 = 0 \qquad (10)$$

being the distribution of the $P_i$ uneven, for instance. Applying the (10) the extracted TBF is the *i*-th and the percent probability to extract the $TBF_i$ is therefore equal to $P_i$.

The TBF extraction is therefore a random process with uneven extraction probability of the single TBF.

An example of the matter could better clarify what said. Considered three TBF: TBF1, TBF2, TBF3, assign the following corresponding percent extraction probabilities P1, P2, P3 such for which:

Extraction probability TBF1, P1=40%
Extraction probability TBF2, P2=35%
Extraction probability TBF3, P3=25%

Let therefore:

Assuming that the random process that generates a number 1 to 100 extracts:

- 25 then the TBF1 shall be extracted because $0 \le 25 \le 40$
- 38 then the TBF1 shall be extracted because $0 \le 38 \le 40$
- 58 then the TBF2 shall be extracted because $40 \le 58 \le 75$
- 65 then the TBF2 shall be extracted because $40 \le 65 \le 75$
- 88 then the TBF3 shall be extracted because $75 \le 88 \le 100$.

From the operational point of view, the scheduler can write the TFI identifiers of the TBF in a table in the memory, each TFI shall be written in as many lines of the table as is the value of its weighted percent probability according to the (8). Afterwards, it is randomly generated a table reading address, considering the mechanism, either hardware or software, for the generation of sequences of random or pseudo-random numbers as known.

We can conclude trying to fully seize the generality of scheduling procedure scope of the invention, which could appear limited due to the fact that the implementation of the decisions downstream the uplink scheduling requires the support of a transmission in progress in the downlink direction, on whichever connection among those sharing the same channel. On the other hand, a mobile system scheduling the resources through distribution of transmission permits, cannot leave out of consideration the transmission of permits to the mobiles, since the latter have no knowledge of transmission requests made by the other mobiles and cannot therefore plan their transmissions. The uplink scheduling though the transmission of USF flags well suits to IP connections, where the downlink trunk is more used, but would go through a crisis, making actually impossible the uplink scheduling in an hypothetical context in which uplink transmissions would withdraw on downlink transmissions. In this case the dynamic allocation of a channel could be differently made, assigning the channel to the MS mobile stations for pre-set times multiples of the duration of an RLC block. Then, the original technical characteristics described in claim 1 would be missing, and we would return to the Round Robin method. The above-mentioned subjects highlight some intrinsic limitations of the GSM-GPRS system, which however would re-present in any mobile system intending to include the methods of the packet transmission. These restrictions are essentially due to the centrality of the control within the BSS sub-system, and act downstream the uplink scheduling process without influencing the methods of transmission permit assignment. In an hypothetical electronic system, non necessarily mobile, in which two groups of fixed equipment placed at the two ends of a full-duplex channel communicate through a narrow band TDMA interface, each group having its own central controller that avails of a permanently allocated channel to convey the signalling of all the equipment, could apply the teachings of the scheduling procedure of the present invention without the need for engaging the channel to transmit the scheduled permits and without the need for scheduling signalling together with data.

## Claims

1. Scheduling procedure of packet data transmissions on radio channels shared by the mobile stations of a mobile telephony system (GSM-GPRS), where channels correspond to equally transmission time intervals, or time-slots, equi-spaced within a radio multiframe existing in each transmission direction, and one or more channels being allocated to each unidirectional connection between a mobile and the network, or vice versa, on the basis of the multi-slot capacities of the mobile, each unidirectional connection allocating a transmission queue (DL_TBF, UL_TBF) to house data packets and control packets synchronised to the radio multiframe and relating to the mobile station (MS) that identifies its connections and transmission concurrent queues through at least one identifier (TFI, USF) inserted in the packets; the procedure being divisible into scheduling steps having equal duration indefinitely repeated, **characterized in that**: each scheduling step includes the following execution steps consisting of:

   a) associating to each channel assigned to the data transmission service a relevant first memory buffer (DL_Buffer_TS, UL_Buffer_TS) to house an exclusive queue of transmission permits (TFI, USF) of data packets on the shared channels;
   b) randomly select one said transmission queue (DL_TBF$i$, UL_TBF$i$) among those currently allocated on said connections between the mobiles and the network;
   c) select a channel among those allocated matching said randomly selected transmission queue, whose associated buffer of the transmission permits (DL_Buffer_TS$j$, UL_Buffer_TS$j$) results globally more unleaded, in case of two or more buffers equally unleaded, randomly select one of them;
   d) fill the maximum possible number of free sequential locations within said buffer of the transmission permits (DL_Buffer_TS$j$, UL_Buffer_TS$j$) that results more unloaded with a same number of identifiers (TFI$i$; USF$i$) of the randomly selected transmission queue, compatibly with a maximum value of locations imposed by factors limiting said filling, each identifier representing a permit for the transmission of a packet on the indicated connection (DL_TBF$i$, UL_TBF$i$).

2. Scheduling procedure according to claim 1, **characterized in that** said transmission queue (DL_TBF$i$, UL_TBF$i$) randomly selected is selected through a random selection procedure with uneven probability distribution aiming at facilitating the choice of transmission queues in which the ratio between the peak transmission speed requested by the relevant mobile station is higher than the transmission speed negotiated with the network, in proportion to said ratio.

3. Scheduling procedure according to claim 1 or 2, **characterized in that** the maximum number of permits that can be assigned in a scheduling step is higher than or equal to the number (N_TS) of said channels assigned to the data transmission service (GPRS).

4. Scheduling procedure according to one of the previous claims, **characterized in that** said scheduling step includes also the following execution steps consisting of:

e) associating to each channel assigned to the data transmission service a relevant second memory buffer (DL_Buffer_sgn_TS) to house an exclusive queue of transmission permits (d/TFI, u/TFI) of control and signalling packets on the shared channels;

f) read a control information that first entered a queue (MN_FIFO_Requests) of priority transmission requests of a control packet, sent by the network to support the signalling, and extract from said control information the identifier (d/TFI, u/TFI) of one said connection (DL_TBF, UL_TBF) and a possible valid value of a positional reservation queues (RRBP);

g) select a channel among the allocated ones matching the connection indicated by the extracted identifier (d/TFI, u/TFI) whose said associated second buffer of permits (DL_Buffer_sgn_TS$j$) results more unloaded, and in the case of two or more buffers equally unloaded, randomly select one of them;

h) insert said extracted identifier (d/TFI$i$, u/TFI$i$) and the possible said positional reservation queues (RRBP) within the first free position of said second more unloaded buffer of permits (DL_Buffer_sgn_TS$j$); said inserted identifier representing a permit for the priority transmission of a control packet on the indicated connection (DL_TBF$i$, UL_TBF$i$), and said positional reservation queues (RRBP) reserving a scheduling-free location in one said first buffer of permits (UL_Buffer_TS$j$, DL_Buffer_TS$j$) placed on the connection in opposite direction compared to the indicated one (u/TFI, d/TFI) to enable the transmission of a reply packet on the same channel after a pre-set number of packets starting from the one received containing the positional reservation queues (RRBP);

i) repeat steps f) through h) up to exhaust said priority requests or up to the end of the scheduling step.

5. Scheduling procedure according to one of the previous claims, **characterized in that** the execution steps b), c), d) are repeated within the current scheduling step, randomly selecting one said transmission queue (DL_TBF$i$, UL_TBF$i$) among those that did not yet enjoy of the assignment of said permits (TFI$i$; USF$i$), when the following conditions result simultaneously true:

- the number of packets within a transmission queue to randomly select (DL_TBF$i$, UL_TBF$i$) results higher than the number of permits assigned up to now to that transmission queue;
- the number of packets that have received a permit up to now within the current scheduling step results lower than the said maximum number of permits that can be assigned in a scheduling step;
- the number of transmission queues (DL_TBF$i$, UL_TBF$i$) selected from the starting of the scheduling step results lower than the total number of transmission queues.

6. Scheduling procedure according to one of the previous claims, **characterized in that** said maximum possible number of locations for the insertion of said identifiers (TFI$i$; USF$i$) corresponds to the minimum value between:

- the number of packets within said randomly selected transmission queue (DL_TBF$i$, UL_TBF$i$) still resulting without a transmission permit;
- the number of packets that can still receive a transmission permit on the selected channel;
- the number of packets within said randomly selected transmission queue (DL_TBF$i$, UL_TBF$i$) for which it is still possible to assign a transmission permit to the current scheduling step.

7. Scheduling procedure according to one of the previous claims, **characterized in that**:

- a first type of identifiers for both the transmission directions (d/TFI, u/TFI) is used in said second buffers (DL_Buffer_sgn_TS) of the transmission permits for the distribution of transmission permits of control packets by the transmission queues (DL_TBF, UL_TBF) placed on one or on the other transmission direction;
- one said first type of identifiers (d/TFI) is used in said first buffers (DL_Buffer_TS) of transmission permits for the distribution of the transmission permits of data packets from the transmission queues (DL_TBF) placed on the connections in downlink direction;
- a second type of identifiers (USF) is used in said first buffers (UL_Buffer_TS) for the distribution of the transmission permits of data packets by the transmission queues placed on the connections in uplink direction (UL_TBF); one said identifier of the second type (USF) being introduced in a packet transmitted in the downlink direction during the present transmission period, selectively enabling the mobiles listening on the channel at the transmission of a packet during the subsequent transmission period.

8. Scheduling procedure according to claim 7, **characterized in that** during the filling of the maximum possible number of free sequential locations within said first buffers (UL_Buffer_TS, DL_Buffer_TS) a location (x element) is intentionally left empty in a default position (x) apart a number of positions starting from the location whose content has the longer waiting time in queue equal to said positional reservation queues (RRBP).

9. Scheduling procedure according to claim 8, **characterized in that**:

   - said first buffers (DL_Buffer_TS) and second buffers (DL_Buffer_sgn_TS) of the transmission permits containing the first type of identifiers (TFI) are scanned in succession meeting the time order of the channels, withdrawing one said identifier (TFI) from a position in queue with the longer waiting time, giving precedence to said second buffers (DL_Buffer_sgn_TS), and selectively enabling the transmission queue time by time identified (DL_TBF$i$, UL_TBF$i$) in order that it transmits a packet on the scanned channel; withdrawing also a possible said valid positional reservation queues (RRBP) and inserting a non-utilisation queues (N.U.) matching the latter, in said empty location in default position (element x) of one said first buffer of the transmission permits (UL_Buffer_TS) containing the second type of identifiers (USF);
   - said first buffers (UL_Buffer_TS) containing the second type of identifiers (USF) are scanned in succession meeting the time order of the channels, withdrawing one said identifier (USF) from a position in queue with the longer waiting time, and selectively enabling the transmission queue time by time identified (UL_TBF$i$) in order that it transmits a packet on the scanned channel.

10. Scheduling procedure according to claim 9, **characterized in that**:

   - after withdrawal of one said identifier (TFI, USF) and of the possible positional reservation queues (RRBP) from said position in queue with the longer waiting time in one of said first (DL_Buffer_TS, UL_Buffer_TS) and/or second buffers (DL_Buffer_sgn_TS) of the transmission permits, the content of this position is reset in the relevant buffers
   - the content at the remaining positions is shifted by one position in outgoing direction;
   - the number of permits scheduled for the transmission queue (DL_TBF$i$, UL_TBF$i$) indicated by the indicator withdrawn (TFI, USF) is decreased by one unit;
   - the number of permits contained in the transmission queue (DL_TBF$i$, UL_TBF$i$) indicated by the indicator withdrawn is decreased by one unit.

11. Scheduling procedure according to claim 10, **characterized in that** when one said valid positional reservation queues (RRBP) is withdrawn from a first buffer of transmission permits (DL_Buffer_TS) containing the first type of identifiers (TFI), said shifting of the content of a corresponding first buffer of the transmission permits (UL_Buffer_TS) containing the second type of identifiers (USF) is made as follows:

   - the elements included between the position preceding that whose content has been reset and said default position (x), included, are shifted by one position in outgoing direction;
   - the elements following said default position (x) are not shifted;
   - the content of said default position (x) is reset.

12. Scheduling procedure according to claim 10, **characterized in that** when a sole identifier (TFI) is withdrawn from a first buffer of transmission permits (DL_Buffer_TS) containing the first type of identifiers (TFI), said shifting of the content of a corresponding first buffer of transmission permits (UL_Buffer_TS) containing the second type of identifiers (USF) is made as follows:

   - the elements included between the position preceding that whose content was reset and the position preceding said default position (x) are shifted by one position in outgoing direction;
   - the element following said default position (x) is shifted by two positions in outgoing direction;
   - the remaining elements following said default position (x) are shifted by one position in outgoing direction.

R Reference point   Um

TE — MT

MS

GPRS 1 Network

Gi Reference point

PDN or other networks

Gp

GPRS 2 Network

**FIG.1**

GSM-GPRS System

SMS-GMSC SMS-IWMSC — SM-SC

E        C

Gd

MSC/VLR ---- HLR

D

-------- Signalling

———— Signalling and Data

Gs

A        Gr    Gc

Gb                    Gi

TE — MT — BSS — SGSN — GGSN — PDN — TE

R    Um    Gn   Gp        Gn      Gf

SGSN

GGSN

Other PLMN networks

Gf — EIR

**FIG.2**

| Application | | | | | | IP / X.25 |
| IP / X.25 | | | | | | |
| SNDCP | | | Relay | | | GTP |
| | | | SNDCP | GTP | | |
| LLC | | | LLC | UDP / TCP | | UDP / TCP |
| RLC | Relay | | BSSGP | IP | | IP |
| | RLC | BSSGP | | | | |
| MAC | MAC | Network services | Network services | L2 | | L2 |
| GSM RF | GSM RF | L1bis | L1bis | L1 | | L1 |

MS    Um    BSS    Gb    SGSN    Gn    GGSN    Gi

**FIG.3**

28

**FIG.4**

EP 1 257 096 A2

8  7  6  5  4  3  2  1

| Address Field (1 octet) |
| Control Field (variable length, max. 36 octets) |

FH

**LLC frame**

| Information Field (variable length, max. N201 octets) |

| Frame Check Sequence Field (3 octets) |

**FIG.5**

52 TDMA Frame

| B0 | B1 | B2 | T | B3 | B4 | B5 | X | B6 | B7 | B8 | T | B9 | B10 | B11 | X |

**FIG.6**

Radio Block

| MAC header | RLC header | RLC data | BCS |

t

**FIG7**

**LLC frame**

| FH | Information field | FCS |

**LLC layer**

**RLC blocks**

| BH | Info field | BCS | BH | Info field | BCS | BH | Info field | BCS |

**Primary block**        **Following block**

**RLC/MAC layer**

| Normal burst | Normal burst | Normal burst | Normal burst |

**Physical layer**

t

**FIG.8**

## Behaviour of the Round Robin Scheduler

### Allocation of TS for TBF

| | 0 | 1 | 2 | 3 | 4 | 5 | 6 | 7 |
|---|---|---|---|---|---|---|---|---|
| TBF1 | 0 | 1 | 0 | 0 | 0 | 0 | 0 | 0 |
| TBF2 | 0 | 1 | 1 | 0 | 0 | 0 | 0 | 0 |
| TBF3 | 0 | 1 | 1 | 1 | 0 | 0 | 0 | 0 |

**FIG.9a**

### Access probability for TS according to Round Robin Scheduler

| | TS1 | TS2 | TS3 |
|---|---|---|---|
| TBF1 | 1/3 | 0 | 0 |
| TBF2 | 1/3 | ½ | 0 |
| TBF3 | 1/3 | ½ | 1 |

**FIG.9b**

### RSF for TBF according to Round Robin Scheduler

| TBF1 | 1/9 = 0.111 |
|---|---|
| TBF2 | 5/18 = 0.278 |
| TBF3 | 11/18 = 0.611 |

**FIG.9c**

**FIG.9d**

### Allocation of TS for TBF

| | 0 | 1 | 2 | 3 | 4 | 5 | 6 | 7 |
|---|---|---|---|---|---|---|---|---|
| TBF1 | 0 | 1 | 1 | 0 | 0 | 0 | 0 | 0 |
| TBF2 | 0 | 1 | 1 | 0 | 0 | 0 | 0 | 0 |
| TBF3 | 0 | 1 | 1 | 1 | 1 | 0 | 0 | 0 |

**FIG.10a**

### Access probability for TS according to Round Robin Scheduler

| | TS1 | TS2 | TS3 | TS4 |
|---|---|---|---|---|
| TBF1 | 1/3 | 1/3 | 0 | 0 |
| TBF2 | 1/3 | 1/3 | 0 | 0 |
| TBF3 | 1/3 | 1/3 | 1 | 1 |

**FIG.10b**

### RSF for TBF according to Round Robin Scheduler

| TBF1 | 2/12 = 0.166 |
|---|---|
| TBF2 | 2/12 = 0.166 |
| TBF3 | 8/12 = 0.666 |

**FIG.10c**

**FIG.10d**

31

## Behaviour of proposed Scheduler

**Allocation of TS for TBF**

| | 0 | 1 | 2 | 3 | 4 | 5 | 6 | 7 |
|---|---|---|---|---|---|---|---|---|
| TBF1 | 0 | 1 | 0 | 0 | 0 | 0 | 0 | 0 |
| TBF2 | 0 | 1 | 1 | 0 | 0 | 0 | 0 | 0 |
| TBF3 | 0 | 1 | 1 | 1 | 0 | 0 | 0 | 0 |

**FIG.11a = FIG.9a**

**Access probability for TS according to Proposed Scheduler**

| | TS1 | TS2 | TS3 |
|---|---|---|---|
| TBF1 | $\cong \frac{1}{2}$ | 0 | 0 |
| TBF2 | $\cong \frac{1}{2}$ | $\cong \frac{1}{2}$ | 0 |
| TBF3 | $\cong 0$ | $\cong \frac{1}{2}$ | 1 |

**FIG.11b**

**RSF for TBF according to Proposed Scheduler**

| | |
|---|---|
| TBF1 | 1/6 = 0.17 |
| TBF2 | 2/6 = 0.33 |
| TBF3 | 3/6 = 0.5 |

**FIG.11c**

**FIG.11d**

**Allocation of TS for TBF**

| | 0 | 1 | 2 | 3 | 4 | 5 | 6 | 7 |
|---|---|---|---|---|---|---|---|---|
| TBF1 | 0 | 1 | 1 | 0 | 0 | 0 | 0 | 0 |
| TBF2 | 0 | 1 | 1 | 0 | 0 | 0 | 0 | 0 |
| TBF3 | 0 | 1 | 1 | 1 | 1 | 0 | 0 | 0 |

**FIG.12a = FIG.10a**

**Access probability for TS according to proposed Scheduler**

| | TS1 | TS2 | TS3 | TS4 |
|---|---|---|---|---|
| TBF1 | $\cong \frac{1}{2}$ | $\cong \frac{1}{2}$ | 0 | 0 |
| TBF2 | $\cong \frac{1}{2}$ | $\cong \frac{1}{2}$ | 0 | 0 |
| TBF3 | $\cong 0$ | $\cong 0$ | 1 | 1 |

**FIG.12b**

**RSF for TBF according to proposed Scheduler**

| | |
|---|---|
| TBF1 | 2/8 = 0.25 |
| TBF2 | 2/8 = 0.25 |
| TBF3 | 4/8 = 05 |

**FIG.12c**

**FIG.12d**

**FIG.13**

EP 1 257 096 A2

LLC Layer

TLLI and multislot class indicators of mobiles having access to the GPRS service.

Downlink LLC frames

Uplink LLC frames

**For all TBFconnections:**
- DL_NumBlocks_TBF_transmit
- UL_NumBlocks_TBF_transmit
- Specific requests (Polling, DL Control Block)
- TFI/USF slot and multislot associations

Scheduler

TBF Manager
(RLC/MAC Layer)

Information to schedule the DL/UL transmission of RLC/MAC blocks

Downlink Scheduler

DL_lista

UL_lista

Uplink Scheduler

RLC/MAC downlink downlink (& USF) TDMA multiplexed on each time slot

- RLC/MAC blocks for all uplink TBF.
- CV values (Countdown Value) for all uplink TBF.

Physical Layer .
(PCU frame)

Abis Interface

Gb Interface

BSC

**FIG.14**

## TBF MANAGER

### ALLOC_Array

| | TS allocated DL | TS allocated UL |
|---|---|---|
| TBF1 | TS1…. TSm | TS1/USF….<br>…TSn/USF |
| ………… | ………… | ………… |
| TBFn | TS1…. TSp | TS1/USF….<br>…TSq/USF |

### DL_list($t_{step}$ - 1)

| TFI<br>(RRBP) | TFI<br>(RRBP) | ….. | TFI<br>(RRBP) |
|---|---|---|---|
| 1 | 2 | | N_TS |

### UL_list($t_{step}$ - 1)

| USF | USF | USF | USF |
|---|---|---|---|
| 1 | 2 | | N_TS |

DL_TBF1

| |
|---|
| - - - - - |
| |
| RLC Block |
| RLC Block |
| RLC Block |
| RLC Block |

DL_TBF2

| |
|---|
| - - - - - |
| |
| |
| RLC Block |
| RLC Block |

DL_NumBlocks_TBF_transmit

| | | | - - - - - | |
|---|---|---|---|---|
| 1 | 2 | | | n |

DL_TBFn

| |
|---|
| - - - - - |
| |
| RLC Block |
| RLC Block |
| RLC Block |

UL_TBF1

| CV_TBF1 |
|---|

UL_TBF2

| CV_TBF2 |
|---|

UL_TBFn

| CV_TBFn |
|---|

UL_NumBlocks_TBF_transmit

| CV1 | CV2 | - - - - - - - - | CVn |
|---|---|---|---|
| 1 | 2 | | n |

**FIG.15**

UL_Buffer_TS

| |
|---|
| Element m |
| ---------- |
| Element x+1 |
| Element x |
| Element x–1 |
| ---------- |
| Element 2 |
| Element 1 |

**FIG.18**

## FIG.16

**Downlink Scheduler**

DL_list

| TFI (RRBP) | TFI (RRBP) | ..... | TFI (RRBP) |
|---|---|---|---|
| 1 | 2 | | N_TS |

Len_DL_Buffer_TS

| | | | |
|---|---|---|---|
| 1 | 2 | | N_TS |

DL_NumBlocks_TBF_Scheduled

| | | | - - - - - | |
|---|---|---|---|---|
| 1 | 2 | | | n |

DL_NumBlocks_TBF_transmit

| | | | - - - - - | |
|---|---|---|---|---|
| 1 | 2 | | | n |

Len_DL_Buffer_sgn_TS

| | | | |
|---|---|---|---|
| 1 | 2 | | N_TS |

DL_Buffer_TS(1)

| - - - - - |
|---|
| TFI |
| TFI |
| TFI |

DL_Buffer_TS(N_TS)

| - - - - - |
|---|
| |
| TFI |
| TFI |

MN_FIFO_Requests

| - - - - - |
|---|
| TFI |
| TFI dummy |
| TFI |
| TFI |
| TFI RRBP |
| TFI RRBP |

DL_Buffer_sgn_TS(1)

| - - - - - |
|---|
| |
| TFI RRBP |

DL_Buffer_sgn_TS(N_TS)

| - - - - - |
|---|
| |
| TFI RRBP |

## FIG.16a

MEM_command_DL_to_UL

| VALID | EMPTY | - - - - - - - - - - | VALID |
|---|---|---|---|
| 1 | 2 | | N_TS |

## FIG.17

**Uplink Scheduler**

Len_UL_Buffer_TS

| | | | |
|---|---|---|---|
| 1 | 2 | | N_TS |

UL_NumBlocks_TBF_Scheduled

| | | | - - - - - |
|---|---|---|---|
| 1 | 2 | | n |

UL_list

| USF | USF | USF | USF |
|---|---|---|---|
| 1 | 2 | | N_TS |

UL_Buffer_TS(1)

| - - - - - |
|---|
| USF |
| USF |
| USF |
| USF |

UL_Buffer_TS(N_TS)

| - - - - - |
|---|
| USF |
| USF |
| USF |
| USF |

UL_NumBlocks_TBF_transmit

| | | | - - - - - | |
|---|---|---|---|---|
| 1 | 2 | | | n |

# GENERALS ON THE SCHEDULING PROCEDURE FOR THE DL/UL TRANSFER OF GPRS RADIO BLOCKS

time       **Downlink Direction**       Uplink Direction
*(See following figure)*

Start of n-th scheduling step (≅20 ms)

$A_D$

**Initial acquisitions from TBF Manager block**

- Acquisition of priority requests for scheduling of transmission permits of control RLC/MAC blocks governing signalling on DL/UL TBF connections.
- Acquisition of the value of the variables expressing the number of RLC/MAC blocks present in each DL TBF buffer governing the packet data transmission.

$B_D$

**Filling of access permit buffers**

- Establishment and selective filling of priority queues associated to GPRS timeslots, the queues containing TFI indicators bi-univocally associated to DL/UL TBF connections, possibly accompanied by a valid value of the RRBP controlfield (for polling).
- Establishment and selective filling of non-priority queues associated to GPRS timeslots, the queues containing TFI indicators bi-univocally associated to DL_TBF buffers housing the queues of RLC/MAC blocks waiting for being downlink transmitted.

$\Gamma_D$

**Emission of downlink scheduler decisions**

Reading of the position characterized by the longer waiting time in each queue associated to GPRS timeslots, meeting the time succession and starting from priority queues, and writing of the information read in a FIFO DL_list buffer.

Order, in case of polling, given to the <u>Uplink scheduler</u> to reserve an empty position in a queue of USF access permits.

Transfer of DL_list buffer to the TBF Manager.

Command to the uplink Scheduler

( MD )       ( Mc )

End n-th step

**FIG.19a**

GENERALS ON THE SCHEDULING PROCEDURE FOR THE
DL/UL TRANSFER OF GPRS RADIO BLOCKS

Downlink Direction
  (see previous figure)

**Uplink Direction**          time

Start of n-th scheduling step ($\cong$20 ms)

| Acquisition of the value of the variables expressing the number of RLC/MAC blocks present in each UL TBF budder governing the packet data transmission |

$A_U$

**Initial
acquisitions
from TBF
Manager
block**

| Establishment and selective filling of queues associated to GPRS timeslots, the queues containing flags USF bi-univocally associated to UL_TBF buffers housing the queues of RLC/MAC blocks waiting for being transmitted in uplink direction. |

$B_U$

**Filling of
access
permit
buffers**

(Mc) →

| Synchronization of control reception from downlink Scheduler. |

$\Gamma_U$

| Readingof the content of the position characterized by the longer waiting time in each queue associated to GPRS timeslots, meeting the time succession of the time slots. |

**Decision
emissions
of the
downlink
scheduler**

| Writing in a FIFO UL_lista buffer, of the information read and transfer of the UL_list buffer to the TBF Manager. |

(MU)

End n-th step

**FIG.19b**

# GENERALS ON THE SCHEDULING PROCEDURE FOR THE DL/UL TRANSFER OF GPRS RADIO BLOCKS

## Downlink and Uplink Directions

time

Start of n-th scheduling step($\cong$20 ms)

(MD)        (MU)

$\Delta$

**Operations made by the TBF Manager**

• Reading of DL_list ($t_{step}$ - 1) and UL_lista ($t_{step}$ - 1) buffers and, for each position read: decoding of the information received and consequent transmission of a RLC/MAC block for the indicated DL/UL TBF connection, after entering of the USF value in the downlink RLC/MAC block.

• Re-insertion of RLC/MAC blocks to re-transmit in the relevant DL/UL TBF buffers .

• Insertion of priority requests in MN_FIFO_Requests buffer.

End of n-th step

**FIG.19c**

# DOWNLINK SCHEDULING PROCESS

## FILLING OF DL_Buffer_sgn_TS BUFFERS

- Allocation of N_TS buffers DL_Buffer_sgn_TS and DL_Buffer_TS.
- Allocation of records: DL_NumBlocks_TBF_transmit, DL_NumBlocks_TBF_Scheduled, Len_DL_Buffer_sgn_TS, Len_ DL_Buffer_TS.
- Allocation of FIFO DL_list and MN_FIFO_Requests buffers.

INIZ

(A)

s = 1 — D1

Make a single reading from buffer MN_FIFO_Requests — D2

D3 — Buffer MN_FIFO_Requests = empty ? → yes → (B)

no

d/TFI*i* o
d/TFI*i* & RRBP

u/TFI*i* o
u/TFI*i* & RRBP

Decoding of information fields — D4

D5

Decoding gives the reference to MS consisting of: a downlink/TFI*i* indicator, the multislot class, and a possible valid RRBP.
**Example:** Polling request of a MS*i* for the uplink transfer of a control block.

D11

Decoding gives the reference to MS*i* consisting of: an uplink/TFI*i* indicator, multislot class, a possible valid RRBP.
**Example :** Transmission request of a downlink control block for a TBF*i* uplink without any concurrent downlink TBF*i*.

D6

Selection of a timeslot TSj of the multislot set to which the shortest priority queue of u/d TFI*i* indicators among queues present in buffers DL_Buffer_sgn_TS is associated.

D12

Selection of a timeslot TSj of the multislot set to which the shortest priority queue of u/d TFI*i* indicators among queues present in buffers DL_Buffer_sgn_TS is associated.

Writing of d/TFI*i* indicator and of possible RRBP default value, in the first free position of DL_Buffer_sgn_TS(j) buffer.

D7

Writing of u/TFI indicator and of possible RRBP in the first free position of buffer DL_Buffer_sgn_TS(j).

D13

- Unit increase in Len_ DL_Buffer_sgn_TS(j) record.
- Unit increase in DL_NumBlocks_TBF_Scheduled(*i*) record.

D8

D14 — Unit increase in Len_ DL_Buffer_sgn_TS(j) record.

D9 — s = N_TS ? → yes

no

s = s+ 1 — D10

**FIG.20a**

(B)

# DOWNLINK SCHEDULING PROCESS

## FILLING OF DL_Buffer_TS BUFFERS

$\text{B}$

Reset of some variables uded for scheduling. — D15

sì

Filling ended

Test on conditions for an iteration of the fillinf of transmission permit queues TFI identifying the DL_TBF buffers housing the queues of RLC/MAC radio blocks. — D16

$\text{C}$

new iteration

- Random selection of a DL_TBF$i$ buffer not yet considered at the current scheduling step $t_{step} \cong 20$ ms.

- Reading of $i$-th position of record DL_NumBlocks_TBF_transmit. — D17

Selection of a time slot TSj among those belonging to the set of the multislot class of the MS mobile associated to the DL_TBFi buffer, to which time slot TSj, the permit shorter TFI$i$ permit queue among those allocated in DL_Buffer_TS buffers is assotiated. If more queues having equal length are present in the multislot set, random selection of a j-th one of them. In both the cases the selected queue is denoted with DL_Buffer_TS(j). — D18

Calculation of the maximum number of permits that can be included in the DL_Buffer_TS(j) buffer housing the shorter queue. — D19

**1)** - Updating of the DL_Buffer_TS(j) buffer content, writing as many TFI$i$ indicators in the DL_TBF$i$ buffer as result from the mximum calculated number.

**2)** - Updating of the content at the $i$-th position of record DL_NumBlocks_TBF_Scheduled.

**3)** - Updating of the number of RLC blocks scheduled up to now in the current scheduling step. — D20

**4)** - Updating of the content at the j-th position of record Len_ DL_Buffer _TS.

**5)** - Updating of the number of DL_TBF queues considered.

## FIG.20b

# DOWNLINK SCHEDULING PROCESS

## DOWNLINK SCHEDULER DECISIONS

**FIG.21a**

# DOWNLINK SCHEDULING PROCESS

## DOWNLINK SCHEDULER DECISIONS (continued)

(D)

D33
- Read INF$i$ information at the position of the k-th buffer DL_Buffer_TS characterized by the longer waiting time.

- Sliding of a position of the content of the k-th buffer DL_Buffer_sgn_TS in direction such to expell the INF$i$ information.

D34
Write the INF$i$ (d/TFI$i$) information in a k-th position of buffer FIFO DL_list

Unit decrease at the $i$-th position of record DL_NumBlocks_TBF_Scheduled
D35

Unit decrease at the k-th position of record Len_ DL_Buffer_TS(k)
D36

D37    $k = k+1$

no ← $K > N\_TS$ ? → yes

(E)    D38

D39
1) Store DL_list.

2) End_command_DL_to_ UL flag enabling.

3) Waiting for end of scheduling step.

(A)

**FIG.21b**

# UPLINK SCHEDULING PROCESS

## FILLING OF BUFFERS   UL_Buffer_TS

INIZ
- Allocation of the N_TS buffers UL_Buffer_TS.
- Allocation of records: UL_NumBlocks_TBF_transmit, UL_NumBlocks_TBF_Scheduled; Len_ UL_Buffer_TS.
- Allocation of FIFO UL_list buffers.
- TFI/USF slot and multislot associations.

(G)

U1

Reset of some variables used for scheduling.

Filling ended

U2

Test on conditions for an iteration of the filling of USD permit queues that enable the MS mobiles to selectively transmit a block on the UL_TBF connection.

(U2)

(F)

new iteration

U3
- Random selection of a UL_TBF$i$ buffer not yet considered at the present scheduling step $t_{step} \cong 20$ ms.
- Reading of $i$-th position of UL_NumBlocks_TBF_transmit record.

U4

Selection of a time slot TSj among those belonging to the set of the multislot class of the MS mobile associated to the UL_TBF$i$ buffer, to which time slot TSj the shortest USF$i$ permit queue among those allocated in buffers UL_Buffer_TS is associated. If more permit queues having equal length are present in the set multislot, random selection of a j-th of them. In both the cases the selected queue is indicated with UL_Buffer_TS(j).

U5

Calculation of the maximum number of permits **Blocks_Single_TBF** that can be inserted in buffer UL_Buffer_TS(j) housing the shortest queue. Work assumption: one calculated permit at least.

(U6)

**FIG.22**

## UPLINK SCHEDULING PROCESS

### FILLING OF BUFFERS  UL_Buffer_TS

(U6)

(*)  x = val RRBP - 1;
val RRBP = 4, ....., 7

U6 — Len_UL_Buffer_TS = L

U7   L ≥ x ?  (*)
yes                    no  (L < x)

Insertion of
Blocks_Single_TBF flags
USF*i* (having index *i*) starting   — U8
from the (L+1)-th position of
buffer UL_Buffer_TS(j)

Len_UL_Buffer_TS =     — U9
Len_UL_Buffer_TS +
Blocks_Single_TBF

Insertion of a flag USFi — U11
(having index i) at the
L-th position of buffer
UL_Buffer _TS(j)

U13
Unit increase of
record          yes    Permits ended ?   U12
Len_UL_Buffer_TS

no

L = L + 1  — U14

U15   Unit increase of
record
Len_UL_Buffer_TS

• Updating of the RLC
block number scheduled up   — U10
to now in the current
scheduling step.

• Updating of the number of
UL_TBF queues
considered.

U16
yes            L = x ?  (*)        no

U17 — L = L + 1

(U2)

Unit increase of
record
Len_UL_Buffer_TS  — U18

## FIG.22b

# UPLINK SCHEDULING STEP
## UPLINK SCHEDULER DECISIONS

U19

( F )

Is flag End_command_DL_to_UL active ?

wait ← no

yes

U20 — k = 1

U21 — Read the k-th position of record MEM_command_DL_to_UL

U22 — Read the USF$i$ information at the position characterized by the longer waiting time in the k-th buffer UL_Buffer_TS.

U23 — Write at the k-th position of buffer UL_list the USF$i$ value read.

U24 — Eliminate from the k-th buffer UL_Buffer_TS the USF$i$ value read

no ← MEM_command_DL_to_UL(k) = VALID$i$ ? → yes

U30 / U25 / U26

**U30:**
- Elements in positions 2 to x–1 if the k-th buffer UL_Buffer_TS are shifted by one position in outgoing direction, thus occupying positions 1 to x–2.

- The element in position x+1 is shifter by two positions in outgoing direction, thus occupying the position x–1.

- Elements in positions x+2 to Len_UL_Buffer_TS of the k-th buffer UL_Buffer_TS are shifted by one, thus occupying positions x+1 to Len_UL_Buffer_TS – 1.

- An EMPTY code is written in x position, which remains still empty.

**U26:**
- Enter NOT USED code at the x position of UL_Buffer_TS(k).

- UL_NumBlocks_TBF_Scheduled($j$) = UL_NumBlocks_TBF_Scheduled($j$) + 1

- Elements in positions 2 to x di UL_Buffer_TS(k) are shifted by one position in outgoing direction, thus occupying positions 1 a x–1.

- Elements in positions x+1 to Len_UL_Buffer_TS of UL_Buffer_TS(k) are **not** shifted.

- An EMPTY code is written in x position, which remains still empty.

UL_NumBlocks_TBF_Scheduled($j$) = UL_NumBlocks_TBF_Scheduled($j$) - 1

U27

**U31:**
- Unit decrease at the k-th position of record Len_ UL_Buffer_TS.

- Unit decrease at the $i$-th position of record UL_NumBlocks_TBF_Scheduled.

**U32:**
- Store UL_list

- Disable End_command_DL_ to_ UL flag

- Waiting for end of scheduling step

U28 — k = k+1

U29 — no ← K > N_TS ? → yes

( G )

**FIG.23**

## ACTIONS UNDERTAKES BY THE TBF MANAGER BASED ON THE COMPLEX OF INFORMATION RECEIVED

time

**Starting of n-th scheduling step (≅20 ms)**

INIZ1 —
> **INFORMATION RECEPTION FROM BSC**
> ●RLC/MAC Blocks for all downlink TBF.
> ●CV Values (Countdown Value) for all uplink TBF.
> ●TLLI Indicators and multislot class of mobiles having access to the GPRS service.
> ● Information for block re-transmission RLC/MAC wrongly received.

INIZ2 —
> **INFORMATION TRANSMISSION TO D/L SCHEDULERS**
> **For all TBF connections:**
> • DL_NumBlocks_TBF_transmit
> • UL_NumBlocks_TBF_transmit
> • Specific requests (Polling, DL Control Block)
> • TFI/USF slot and multislot associations

M1 — $k = 1$

(H4)

M2 —
> Reading of a k-th position of buffers DL_lista($t_{step}$ - 1) and UL_lista($t_{step}$ - 1).

M3 —
> Decoding of information fields

**u/TFI*i***

**d/TFI*i* & RRBP**

**d/TFI*i***

M4 —
> Store **USF*i*** field

M5 —
> Select the first RLC/MAC control block waiting to be transmitted for the addressed TBF*i* uplink conncection.

M9 —
> • Select the first RLC/MAC control block that enabled a polling request for the addressed TBF*i* downlink connection.
> • Fill RRBP and S/P fields of the selected block in accordance with technical specifications.

M15 —
> Select an RLC/MAC block for the addressed TBF*i* downlink connection, meeting the following priority:
> 1. RLC/MAC control block, except for a Dummy Control Block.
> 2. RLC data block with the lowest sequence number within buffer TBF*i*.
> 3. RLC/MAC control block of Dummy type.

(H1)

(H2)

(H3)

**FIG.24a**

tempo

(H1)   (H2)   (H3)

M10

USFi = valid?    no

M16

USFi = valid?    no

yes    M11

Fill USF field of
the selected block
with the stored
USFi value.

M17

Fill USF field of
the selected
block with the
stored USFi
value.

yes

Unit decrease at
the i_th position
of record
UL_NumBlocks_
TBF_transmit.    M12

M18    Unit decrease at
the i_th position
of record
UL_NumBlocks_
TBF_transmit.

M13    Unit decrease at
the i_th position
of record
DL_NumBlocks_
TBF_transmit.

M19    Unit decrease at
the i_th position
of record
DL_NumBlocks_
TBF_transmit.

M6    Transmit selected
block.

M14    Transmit selected
block.

M20    Transmit selected
block.

M7    k = k+1

M8

K > N_TS ?    no    (H4)

yes

Wait for end of
scheduling
step

**End of n-th scheduling step**

**FIG.24b**

# TBF Manager

| | TS allocated DL | TS allocated UL |
|---|---|---|
| TBF1 | TS1 | No allocation |
| TBF2 | TS1 & TS2 | USF = 1 for TS1<br>USF = 2 for TS2 |
| TBF3 | TS2 | USF = 1 for TS2 |

UL_NumBlocks_TBF_transmit

| | CV_value TBF2 | CV_value TBF3 |
|---|---|---|

DL_NumBlocks_TBF_transmit

| 4 | 3 | 2 |
|---|---|---|

A

**TBF1**

Block 6
Block 5
Block 4
Block 3

**TBF2**

Block 6
Block 5
Block 2

**TBF3**

Block 3
Block 2

Block 3 RRBP
USF=1

Block 2
USF=2

Block 5
USF=1

Block 6
USF=1

Block 4
USF= N.U

Block 2
USF=2

TS1  TS2  TS1  TS2  TS1  TS2

**Um Interface (downlink)**

**FIG.25a**

**Downlink Scheduler**

DL_NumBlocks_TBF_Scheduled

A

| 4 | 3 | 2 |

| TFI / TBF1 |
| TFI / TBF1 |
| TFI / TBF1 |
| RRBP TFI/TBF1 | TFI / TBF2 |

DL_Buffer_sgn_TS(1)

| TFI / TBF3 |
| TFI / TBF3 |
| TFI / TBF2 |
| TFI / TBF2 |

DL_Buffer_TS(1)　　DL_Buffer_TS(2)　　DL_Buffer_sgn_TS(2)

| 4 | 4 |　　| 1 | 0 |

Len_DL_Buffer_TS　　Len_DL_sgn_Buffer_TS

**FIG.25b**

---

UL_NumBlock_TBF_Scheduled

USF = N.U. (Not Used), USF value reserved for RRBP.

**Uplink Scheduler**

| 4 | 2 |

A

Position x

| USF = 2 |
| USF = N.U. |
| USF = 2 |
| USF = 2 |

| USF = 2 |
| USF = EMPTY |
| USF = 3 |
| USF = 3 |

UL_Buffer_TS(1)　　　　UL_Buffer_TS(2)

| 3 | 3 |

Len_UL_Buffer_TS

**FIG.25c**

| LIMITING FACTORS [minimum among 1), 2), 3)] | | ITERATION CONDITIONS | |
|---|---|---|---|
| 1) | Blocks to transmit for the TBF($i$) – Scheduled blocks for the TBF($i$) | a) | Blocks to transmit for any TBF($i$) > Scheduled blocks |
| 2) | 3 – NumBlocks_TBF_to_TS | b) | NumBlocks_TBF_to_TS < 3 |
| 3) | 4 – Len_DL_Buffer_TS($j$) | c) | Number of scheduled TBF queues < 2 |

**FIG.26**

| DOWNLINK SCHEDULING STEP N° 1 | | | | | | | | | | | | | | | | | |
|---|---|---|---|---|---|---|---|---|---|---|---|---|---|---|---|---|---|
| Iterat. | DL_TBF$i$ selected | | | DL_Buffer_ _sgn_TS$j$ selected | | DL_Buffer_ _TS$j$ selected | | N° TFI entered | Len_DL_ Buffer_TS$j$ | | DL_N.Blocks TBF_Sched. | | | LIMITING FACTORS | | | CONDITIONS FOR NEW ITERATION | | |
| No | 1 | 2 | 3 | 1 | 2 | 1 | 2 | | 1 | 2 | 1 | 2 | 3 | 1) | 2) | 3) | a) | b) | c) |
| 1 | x | - | - | x | - | - | - | 1 | - | - | 1 | 0 | 0 | - | - | - | - | - | - |
| 2 | - | x | - | - | - | - | x | 2 | 0 | 2 | 1 | 2 | 0 | - | x | - | - | x | - |

| DOWNLINK SCHEDULING STEP N° 2 | | | | | | | | | | | | | | | | | |
|---|---|---|---|---|---|---|---|---|---|---|---|---|---|---|---|---|---|
| Iterat. | DL_TBF$i$ selected | | | DL_Buffer_ _sgn_TS$j$ selected | | DL_Buffer_ _TS$j$ selected | | N° TFI entered | Len_DL_ Buffer_TS$j$ | | DL_N.Blocks TBF_Sched. | | | LIMITING FACTORS | | | CONDITIONS FOR NEW ITERATION | | |
| No | 1 | 2 | 3 | 1 | 2 | 1 | 2 | | 1 | 2 | 1 | 2 | 3 | 1) | 2) | 3) | a) | b) | c) |
| 1 | - | x | - | - | - | X | - | 1 | 1 | 2 | 1 | 3 | 0 | x | - | - | - | - | - |
| 2 | x | - | - | - | - | X | - | 2 | 3 | 2 | 3 | 3 | 0 | - | x | - | - | x | - |

| DOWNLINK SCHEDULING STEP N° 3 | | | | | | | | | | | | | | | | | |
|---|---|---|---|---|---|---|---|---|---|---|---|---|---|---|---|---|---|
| Iterat. | DL_TBF$i$ selected | | | DL_Buffer_ _sgn_TS$j$ selected | | DL_Buffer_ _TS$j$ selected | | N° TFI entered | Len_DL_ Buffer_TS$j$ selected | | DL_N.Blocks TBF_Sched. | | | LIMITING FACTORS | | | CONDITIONS FOR NEW ITERATION | | |
| No | 1 | 2 | 3 | 1 | 2 | 1 | 2 | | 1 | 2 | 1 | 2 | 3 | 1) | 2) | 3) | a) | b) | c) |
| 1 | - | - | x | - | - | - | x | 2 | 3 | 4 | 3 | 3 | 2 | x | - | - | - | - | - |
| 2 | x | - | - | - | - | x | - | 1 | 4 | 4 | 4 | 3 | 2 | - | - | x | - | - | x |

EP 1 257 096 A2